# EUROPEAN PATENT APPLICATION

(11) **EP 4 518 368 A1**
(43) Date of publication of application: **05.03.2025**
(21) Application number: 22943525.0
(22) Date of filing: 22.11.2022
(51) Int. Cl.: H04W 4/12, H04L 67/55

(54) **COMMUNICATION METHOD, APPARATUS, AND SYSTEM**

(30) Priority: 26.05.2022 CN 202210579914
(71) Applicant: Huawei Technologies Co., Ltd., Shenzhen, Guangdong 518129 (CN)
(72) Inventor: WANG, Han, Shenzhen, Guangdong 518129 (CN); CHAI, Xiaoqian, Shenzhen, Guangdong 518129 (CN); HAO, Hongxia, Shenzhen, Guangdong 518129 (CN)
(74) Representative: Pfenning, Meinig & Partner mbB
(86) International application number: PCT/CN2022/133390
(87) International publication number: WO 2023/226338

(57) **Abstract**

Provided are a communication method, apparatus, and system. The communication method includes: A rich media message application server receives a first query request message from a rich media message terminal, where the first query request message includes query information, the query information includes information used to describe a rich media message miniapp needed by a user corresponding to the rich media message terminal, and the rich media message miniapp is a miniapp that uses a rich media message client in the rich media message terminal as a host client. The rich media message application server obtains information about the rich media message miniapp in response to the first query request. The rich media message application server sends a first query response message to the rich media message terminal, where the first query response message includes the information about the rich media message miniapp. The rich media message terminal may download and run the rich media message miniapp based on the information about the rich media message miniapp, so that some functions are implemented by using the rich media message miniapp, thereby simplifying a user operation and improving user experience.

## Description

This application claims priority to Chinese Patent Application No. 202210579914.2, filed with the China National Intellectual Property Administration on May 26, 2022 and entitled "COMMUNICATION METHOD, APPARATUS, AND SYSTEM", which is incorporated herein by reference in its entirety.

### TECHNICAL FIELD

This application relates to the communication field, and in particular, to a communication method, apparatus, and system.

### BACKGROUND

A chatbot (Chatbot) service is introduced into a rich communication suite (rich communication suite, RCS) technology, to implement "message as a service". Specifically, integration of communication technologies, internet technologies, and artificial intelligence brings a new human-computer interaction mode. Users can complete one-stop service experience such as service discovery, search, interaction, and payment in a message window, greatly improving value of industry messages of an operator. According to the current rich communication technology, a user needs to interact with a chatbot for a plurality of times to complete a service process. Operations are complex, and an interaction process is long, affecting user experience.

### SUMMARY

Embodiments of this application provide a communication method, apparatus, and system, to simplify user operations and improve user experience.

According to a first aspect, a communication method is provided. The method may be performed by a rich media message application server, or may be performed by a component (for example, a chip or a circuit) of the rich media message application server. This is not limited.

The method may include: The rich media message application server receives a first query request message from a rich media message terminal, where the first query request message includes query information, the query information includes information used to describe a rich media message miniapp needed by a user corresponding to the rich media message terminal, and the rich media message miniapp is a miniapp that uses a rich media message client in the rich media message terminal as a host client. The rich media message application server obtains information about the rich media message miniapp in response to the first query request message, and sends a first query response message to the rich media message terminal, where the first query response message includes the information about the rich media message miniapp.

Based on the foregoing technical solution, the rich media message terminal sends the first query request message to the rich media message application server, where the first query request message includes the query information, and the query information includes the information used to describe the rich media message miniapp needed by the user corresponding to the rich media message terminal. In this way, the rich media message application server can obtain, based on the query information, the rich media message miniapp that matches the query information, and further provide the information about the rich media message miniapp for the rich media message terminal. In this way, the rich media message terminal can download and run the rich media message miniapp based on the information about the rich media message miniapp, so that some functions are implemented by using the rich media message miniapp, thereby simplifying a user operation and improving user experience.

With reference to the first aspect, in some implementations of the first aspect, that the rich media message application server obtains the information about the rich media message miniapp includes: The rich media message application server sends a second query request message to a miniapp management server, where the second query request message includes the query information. The rich media message application server receives a second query response message from the miniapp management server, where the second query response message includes the information about the rich media message miniapp.

Based on the foregoing technical solution, the rich media message application server can generate the second query request message based on the query information in the first query request message, and send the second query request message to the miniapp management server. After receiving the second query request message, the miniapp management server can determine, based on the query information in the second query request message, the information about the rich media message miniapp that matches the query information, and send the information about the rich media message miniapp to the miniapp management server.

With reference to the first aspect, in some implementations of the first aspect, that the rich media message application server obtains the information about the rich media message miniapp includes: The rich media message application server locally obtains the information about the rich media message miniapp based on the query information.

Based on the foregoing technical solution, the rich media message application server can independently determine the information about the rich media message miniapp.

With reference to the first aspect, in some implementations of the first aspect, before the rich media message application server obtains the information about the rich media message miniapp, the method further includes: The rich media message application server determines to allow the user to use the rich media message miniapp.

Based on the foregoing technical solution, after receiving the first query request message sent by the rich media message terminal, the rich media message application server may first determine whether to allow the user corresponding to the rich media message terminal to use the rich media message miniapp. When determining to allow the user corresponding to the rich media message terminal to use the rich media message miniapp, the rich media message application server obtains the information about the rich media message miniapp.

With reference to the first aspect, in some implementations of the first aspect, that the rich media message application server determines to allow the user to use the rich media message miniapp includes: The rich media message application server determines, based on subscription information of the user and/or information about an operator to which the user belongs, to allow the user to use the rich media message miniapp.

With reference to the first aspect, in some implementations of the first aspect, the rich media message application server is a messaging as a platform MaaP or a chatbot Chatbot platform, and the rich media message terminal communicates with the rich media message application server through a chatbot directory query interface.

With reference to the first aspect, in some implementations of the first aspect, that the rich media message application server receives the first query request message from the rich media message terminal includes: The rich media message application server receives the first query request message through the chatbot directory query interface. That the rich media message application server sends the first query response message to the rich media message terminal includes: The rich media message application server sends the first query response message through the chatbot directory query interface.

Based on the foregoing technical solution, the rich media message terminal can query the rich media message miniapp through the chatbot directory query interface, without adding an additional configuration parameter or introducing an additional interface security authentication process, so that configuration efficiency and startup efficiency of the rich media message terminal can be improved. In addition, no additional user identity authentication process is needed, so that resource utilization of a rich media message system can be improved.

With reference to the first aspect, in some implementations of the first aspect, the first query request message further includes indication information, and the indication information indicates the rich media message application server to provide the information about the rich media message miniapp based on the query information.

According to a second aspect, a communication method is provided. The method may be performed by a rich media message terminal, or may be performed by a component (for example, a chip or a circuit) of the rich media message terminal. This is not limited.

The method may include: The rich media message terminal sends a first query request message to a rich media message application server, where the first query request message includes query information, the query information includes information used to describe a rich media message miniapp needed by a user corresponding to the rich media message terminal, and the rich media message miniapp is a miniapp that uses a rich media message client in the rich media message terminal as a host client. The rich media message terminal receives a first query response message from the rich media message application server, where the first query response message includes information about the rich media message miniapp. The rich media message terminal downloads and runs the rich media message miniapp based on the information about the rich media message miniapp.

With reference to the second aspect, in some implementations of the second aspect, the rich media message application server is a messaging as a platform MaaP or a chatbot Chatbot platform, and the rich media message terminal communicates with the rich media message application server through a chatbot directory query interface.

With reference to the second aspect, in some implementations of the second aspect, that the rich media message terminal sends the first query request message to the rich media message application server includes: The rich media message terminal sends the first query request message through the chatbot directory query interface. That the rich media message terminal receives the first query response message from the rich media message application server includes: The rich media message terminal receives the first query response message through the chatbot directory query interface.

With reference to the second aspect, in some implementations of the second aspect, the first query request message further includes indication information, and the indication information indicates the rich media message application server to provide the information about the rich media message miniapp based on the query information.

For beneficial effects of the second aspect and the possible designs, refer to the related descriptions of the first aspect. Details are not described herein again.

According to a third aspect, a communication method is provided. The method may be performed by a miniapp management server, or may be performed by a component (for example, a chip or a circuit) of the miniapp management server. This is not limited.

The method may include: The miniapp management server receives a first query request message from a rich media message terminal, where the first query request message includes query information, the query information includes information used to describe a rich media message miniapp needed by a user corresponding to the rich media message terminal, and the rich media message miniapp is a miniapp that uses a rich media message client in the rich media message terminal as a host client. The miniapp management server obtains information about the rich media message miniapp based on the query information. The miniapp management server sends a first query response message to the rich media message terminal, where the first query response message includes the information about the rich media message miniapp.

Based on the foregoing technical solution, the rich media message terminal can send the first query request message to the miniapp management server, where the first query request message includes the query information. In this way, the miniapp management server can obtain, based on the query information, the rich media message miniapp that matches the query information, and further provide the information about the rich media message miniapp for the rich media message terminal. In this way, the rich media message terminal can download and run the rich media message miniapp based on the information about the rich media message miniapp, so that some functions are implemented by using the rich media message miniapp, thereby simplifying a user operation and improving user experience.

With reference to the third aspect, in some implementations of the third aspect, before the miniapp management server obtains the information about the rich media message miniapp based on the query information, the method further includes: The miniapp management server determines to allow the user to use the rich media message miniapp.

With reference to the third aspect, in some implementations of the third aspect, that the miniapp management server determines to allow the user to use the rich media message miniapp includes: The miniapp management server determines, based on subscription information of the user and/or information about an operator to which the user belongs, to allow the user to use the rich media message miniapp.

Based on the foregoing technical solution, after receiving the first query request message sent by the rich media message terminal, the miniapp management server may first determine whether to allow the user corresponding to the rich media message terminal to use the rich media message miniapp. When determining to allow the user corresponding to the rich media message terminal to use the rich media message miniapp, the miniapp management server obtains the information about the rich media message miniapp.

With reference to the third aspect, in some implementations of the third aspect, the rich media message terminal communicates with the miniapp management server through a miniapp directory query interface.

With reference to the third aspect, in some implementations of the third aspect, that the miniapp management server receives the first query request message from the rich media message terminal includes: The miniapp management server receives the first query request message through the miniapp directory query interface. That the miniapp management server sends the first query response message to the rich media message terminal includes: The miniapp management server sends the first query response message through the miniapp directory query interface.

According to a fourth aspect, a communication method is provided. The method may be performed by a rich media message terminal, or may be performed by a component (for example, a chip or a circuit) of the rich media message terminal. This is not limited.

The method may include: The rich media message terminal sends a first query request message to a miniapp management server, where the first query request message includes query information, the query information includes information used to describe a rich media message miniapp needed by a user corresponding to the rich media message terminal, and the rich media message miniapp is a miniapp that uses a rich media message client in the rich media message terminal as a host client. The rich media message terminal receives a first query response message from the miniapp management server, where the first query response message includes information about the rich media message miniapp. The rich media message terminal downloads and runs the rich media message miniapp based on the information about the rich media message miniapp.

With reference to the fourth aspect, in some implementations of the fourth aspect, the rich media message terminal communicates with the miniapp management server through a miniapp directory query interface.

With reference to the fourth aspect, in some implementations of the fourth aspect, that the rich media message terminal sends the first query request message to the miniapp management server includes: The rich media message terminal sends the first query request message through the miniapp directory query interface. That the rich media message terminal receives the first query response message from the miniapp management server includes: The rich media message terminal receives the first query response message through the miniapp directory query interface.

For beneficial effects of the fourth aspect and the possible designs, refer to the related descriptions of the third aspect. Details are not described herein again.

According to a fifth aspect, a communication method is provided. The method may be performed by a rich media message application server and a rich media message terminal, or may be performed by a component (for example, a chip or a circuit) of the rich media message application server and a component (for example, a chip or a circuit) of the rich media message terminal. This is not limited.

The method may include: The rich media message terminal sends a first query request message to the rich media message application server, where the first query request message includes query information, the query information includes information used to describe a rich media message miniapp needed by a user corresponding to the rich media message terminal, and the rich media message miniapp is a miniapp that uses a rich media message client in the rich media message terminal as a host client. The rich media message application server receives the first query request message, obtains information about the rich media message miniapp in response to the first query request message, and sends a first query response message to the rich media message terminal, where the first query response message includes the information about the rich media message miniapp. The rich media message terminal receives the first query response message, and downloads and runs the rich media message miniapp based on the information about the rich media message miniapp.

For the rich media message application server, refer to the descriptions in the first aspect. For the rich media message terminal, refer to the descriptions in the second aspect. Details are not described herein again.

With reference to the fifth aspect, in some implementations of the fifth aspect, the rich media message application server is a messaging as a platform MaaP or a chatbot Chatbot platform, and the rich media message terminal communicates with the rich media message application server through a chatbot directory query interface.

With reference to the fifth aspect, in some implementations of the fifth aspect, that the rich media message terminal sends the first query request message to the rich media message application server, and the rich media message application server receives the first query request message includes: The rich media message terminal sends the first query request message through the chatbot directory query interface, and the rich media message application server receives the first query request message through the chatbot directory query interface. That the rich media message application server sends the first query response message to the rich media message terminal, and the rich media message terminal receives the first query response message includes: The rich media message application server sends the first query response message through the chatbot directory query interface, and the rich media message terminal receives the first query response message through the chatbot directory query interface.

With reference to the fifth aspect, in some implementations of the fifth aspect, the first query request message further includes indication information, and the indication information indicates the rich media message application server to provide the information about the rich media message miniapp based on the query information.

For beneficial effects of the fifth aspect, refer to the related descriptions of the first aspect. Details are not described herein again.

With reference to the first aspect to the fifth aspect, in some implementations, the query information includes at least one of the following or a keyword included in at least one of the following: a name of the rich media message miniapp, a type of the rich media message miniapp, a name of a provider of the rich media message miniapp, a service content description or a function description of the rich media message miniapp, a language supported by the rich media message client, or a version of the rich media message client.

With reference to the first aspect to the fifth aspect, in some implementations, the information about the rich media message miniapp includes a download address of the rich media message miniapp.

With reference to the first aspect to the fifth aspect, in some implementations, the information about the rich media message miniapp includes at least one of the following: an identifier of the rich media message miniapp, the name of the rich media message miniapp, an address of an icon of the rich media message miniapp, or a version of the rich media message miniapp.

According to a sixth aspect, a communication apparatus is provided. The apparatus is configured to perform the method in any possible implementation of the first aspect to the fifth aspect. Specifically, the apparatus may include units and/or modules, for example, a processing unit and/or a communication unit, configured to perform the method in any possible implementation of the first aspect to the fifth aspect.

In an implementation, the apparatus is a communication device (for example, a rich media message application server, a rich media message terminal, or a miniapp management server). When the apparatus is a communication device, the communication unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used in a communication device (for example, a rich media message application server, a rich media message terminal, or a miniapp management server). When the apparatus is a chip, a chip system, or a circuit used in a communication device, the communication unit may be an input/output interface, an interface circuit, an output circuit, an input circuit, a pin, a related circuit, or the like on the chip, the chip system, or the circuit; and the processing unit may be at least one processor, a processing circuit, a logic circuit, or the like.

According to a seventh aspect, a communication apparatus is provided. The apparatus includes at least one processor, configured to execute a computer program or instructions stored in a memory, to perform the method in any possible implementation of the first aspect to the fifth aspect. Optionally, the apparatus further includes the memory, configured to store the computer program or the instructions. Optionally, the apparatus further includes a communication interface, and the processor reads, through the communication interface, the computer program or the instructions stored in the memory.

In an implementation, the apparatus is a communication device (for example, a rich media message application server, a rich media message terminal, or a miniapp management server).

In another implementation, the apparatus is a chip, a chip system, or a circuit used in a communication device (for example, a rich media message application server, a rich media message terminal, or a miniapp management server).

According to an eighth aspect, a processor is provided, configured to perform the methods provided in the foregoing aspects.

Operations such as sending and obtaining/receiving related to the processor may be understood as operations such as output and receiving or input of the processor, or operations such as sending and receiving performed by a radio frequency circuit and an antenna, unless otherwise specified, or provided that the operations do not contradict actual functions or internal logic of the operations in related descriptions. This is not limited in this application.

According to a ninth aspect, a computer-readable storage medium is provided. The computer-readable medium stores program code to be executed by user equipment, and the program code is used to perform the method in any possible implementation of the first aspect to the fifth aspect.

According to a tenth aspect, a computer program product including instructions is provided. When the computer program product runs on a computer, the computer is enabled to perform the method in any possible implementation of the first aspect to the fifth aspect.

According to an eleventh aspect, a communication system is provided, including at least one of the rich media message application server, the rich media message terminal, and the miniapp management server above.

### BRIEF DESCRIPTION OF DRAWINGS

FIG. 1 is a diagram of a communication system applicable to an embodiment of this application;
FIG. 2 is a diagram of another communication system applicable to an embodiment of this application;
FIG. 3 is a diagram of another communication system applicable to an embodiment of this application;
FIG. 4 is a diagram of another communication system applicable to an embodiment of this application;
FIG. 5 is a diagram of booking a ticket by a user;
FIG. 6 is a diagram of a communication method 600 according to an embodiment of this application;
FIG. 7 is a diagram of a communication method 700 according to an embodiment of this application;
FIG. 8 is a schematic flowchart of a communication method 800 according to an embodiment of this application;
FIG. 9 is a diagram of a query effect of a rich media miniapp;
FIG. 10 is a schematic flowchart of a communication method 1000 according to another embodiment of this application;
FIG. 11 is a diagram of a communication apparatus 1100 according to an embodiment of this application; and
FIG. 12 is a diagram of another communication apparatus 1200 according to an embodiment of this application.

### DESCRIPTION OF EMBODIMENTS

The following describes technical solutions in embodiments of this application with reference to accompanying drawings.

The technical solutions in embodiments of this application may be applied to various communication systems, for example, a 5th generation (5th generation, 5G) system or a new radio (new radio, NR) system. The technical solutions provided in this application may be further applied to a future communication system, for example, a 6th generation mobile communication system. The technical solutions provided in this application may be further applied to device-to-device (device-to-device, D2D) communication, vehicle-to-everything (vehicle-to-everything, V2X) communication, machine-to-machine (machine-to-machine, M2M) communication, machine type communications (machine type communications, MTC), an internet of things (internet of things, IoT) communication system, or another communication system.

For ease of understanding embodiments of this application, terms used in this application are first briefly described.

1. Rich communication suite (rich communication suite, RCS) message: It complies with a rich communication convergence.07 (rich communication convergence.07, RCC.07) standard specification and a rich communication convergence.71 (rich communication convergence.71, RCC.71) standard specification that are released by the global system for mobile communications association (global system for mobile communications association, GSMA). RCS messages are an upgrade of conventional short messages. RCS messages are implemented based on GSMA RCS and related standards on the basis of a classic message service number system, carrier-class verification, wide coverage, high reachability, and other advantages, break through limitations on lengths and content formats of conventional short messages, and support various media formats such as a text, a picture, audio, a video, a location, and a contact. In addition, a messaging as a platform (MaaP) platform is introduced, promoting convergence of vertical industries in the information communications industry.

For terminal users, RCS messages can provide point-to-point message and group chat services. In addition to a text, RCS messages may further support content forms such as a picture, audio, a video, a location, and a contact. For industry customers, RCS messages can provide enhanced message services between individuals and applications, implementing "messaging as a platform". In addition, a new message interaction mode, namely, a chatbot, is introduced, to connect terminals in a message dialog manner and provide services such as search, discovery, interaction, and payment in dialog boxes. In this way, industry customers such as enterprises can interact with terminal users.

For example, a rich media message may be referred to as an RCS message or a 5G message (MSGin5G message). The rich media message may be used between internet of things devices. Therefore, the rich media message may also be referred to as a 5G internet of things message. It may be understood that a specific name of the message does not limit the protection scope of embodiments of this application. The following uses the rich media message as an example for description.

2. Chatbot: It is a presentation form of an industry message application in rich media messages. It simulates intelligent human conversations and provides industry message services for users.

3. Miniapp (MiniApp): It is an application that is implemented based on a web technology (web technology) (for example, JavaScript) and that can run in a host mobile application (or a host client) on a terminal device without being installed on the terminal device. The host mobile application (or the host client) can run only after being installed on the terminal device, and generally may run a plurality of (types of) miniapps.

4. Rich media message miniapp: It is a miniapp that uses a rich media message application (or a rich media message client) running on a terminal device (or referred to as a rich media message terminal) as a host application (or a host client). In other words, the rich media message miniapp may be interpreted and executed after being downloaded by the rich media message application from a network side, and does not need to be installed on the terminal device. Optionally, a built-in miniapp engine (used to interpret and execute the rich media message miniapp) in the rich media message application may be decoupled from the rich media message miniapp. For example, both the miniapp engine and the rich media message miniapp may be upgraded independently of each other. After being run, the rich media message miniapp may interact with a server corresponding to the rich media miniapp, to implement services such as service discovery, search, interaction, and payment.

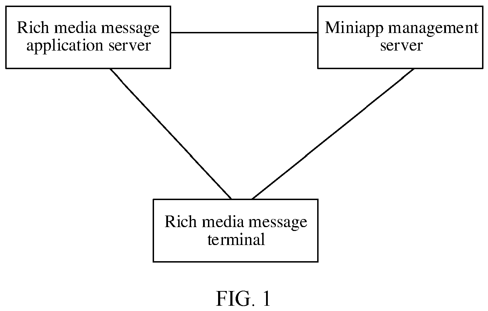

For ease of understanding embodiments of this application, communication systems applicable to embodiments of this application are described in detail below with reference to FIG. 1 to FIG. 4.

FIG. 1 is a diagram of a communication system applicable to an embodiment of this application. As shown in FIG. 1, the communication system may include a rich media message application server, a miniapp management server, and a rich media message terminal. The rich media message terminal may directly communicate with the miniapp management server, or the rich media message terminal may communicate with the miniapp management server through the rich media message application server. The following briefly describes the devices.
1. Rich media message terminal: It is a digital mobile communication terminal that supports a rich media message service and on which a rich media message client is generally installed. In other words, the rich media message service is supported through the rich media message client.

It may be understood that the rich media message terminal is merely a name, and may also be generally referred to as a terminal device, user equipment (user equipment, UE), an access terminal, a subscriber unit, a subscriber station, a mobile station, a remote station, a remote terminal, a mobile device, a user terminal, a terminal, a wireless communication device, a user agent, or a user apparatus.

The rich media message terminal may be a device that provides a user with voice/data, for example, a handheld device or a vehicle-mounted device having a wireless connection function. Currently, some examples of the rich media message terminal may be a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in remote surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device or a computing device having a wireless communication function, another processing device or wearable device connected to a wireless modem, a terminal device in a 5G network, a terminal device in a future evolved public land mobile network (public land mobile network, PLMN), or the like. This is not limited in embodiments of this application.

By way of example, and not limitation, in this embodiment of this application, the rich media message terminal may alternatively be a wearable device. The wearable device may also be referred to as a wearable intelligent device, and is a general term of a wearable device that is intelligently designed and developed for daily wear by using a wearable technology, for example, glasses, gloves, a watch, clothing, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-size devices that can implement complete or partial functions without depending on smartphones, for example, smart watches or smart glasses, and devices that dedicated to only one type of application and need to be used together with other devices such as smartphones, such as various smart bands or smart jewelry used for monitoring physical signs.

In this embodiment of this application, an apparatus configured to implement a function of a rich media message terminal may be a rich media message terminal, or may be an apparatus that can support the rich media message terminal in implementing the function, for example, a chip system or a chip. The apparatus may be installed in the rich media message terminal. In this embodiment of this application, the chip system may include a chip, or may include a chip and another discrete component.

In addition, the rich media message terminal may also be referred to as a 5G message terminal or an RCS client (RCS client). The following uses the rich media message terminal as an example for description.

2. Rich media message client: It is an application or a client that has a rich media message service function, has a built-in miniapp engine, and can query information about a rich media message miniapp from a network side, download the rich media message miniapp, and run or interpret and execute the rich media message miniapp. For ease of understanding, the rich media message client is referred to as a host client of the rich media message miniapp.

3. Rich media message application server: It is a platform established by a communication operator to interface with industry customers, and is mainly used to implement functions such as access management and authentication of chatbots and messages of industry customers, and uploading and storage of multimedia content in industry messages, so that industry customers can provide message services in various media formats for users. The rich media message application server may further support rich media message miniapp service permission authentication, that is, determine whether to allow a rich media message terminal to use a rich media message miniapp service.

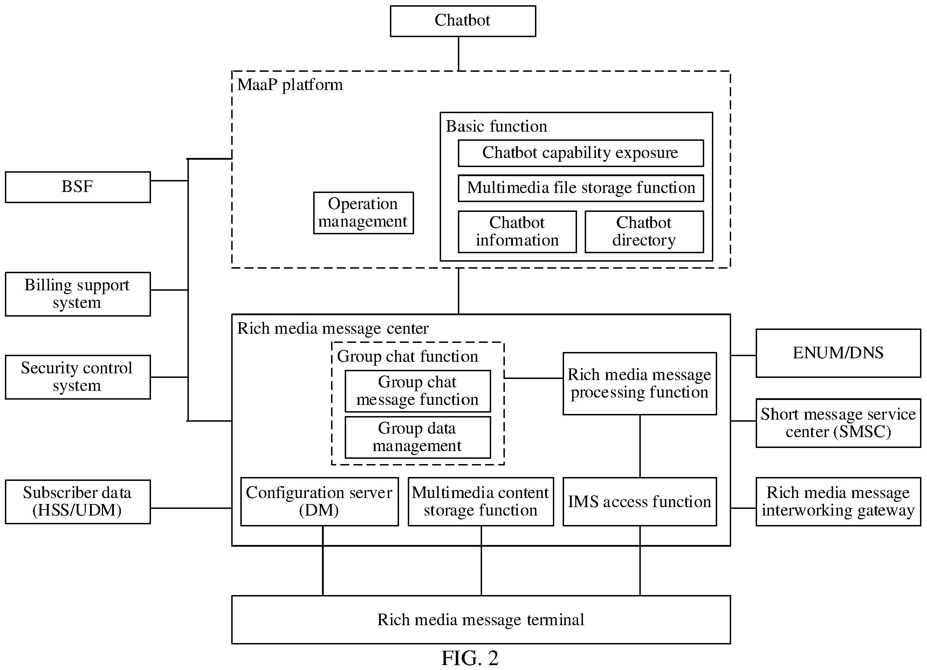

For example, the rich media message application server may be a MaaP platform, an internet of things message center, or the like. The MaaP platform may also be referred to as a chatbot platform (Chatbot platform), and a name of the MaaP platform does not limit the protection scope of embodiments of this application. The following uses the MaaP platform as an example for description. The MaaP platform is described in detail below with reference to FIG. 2.

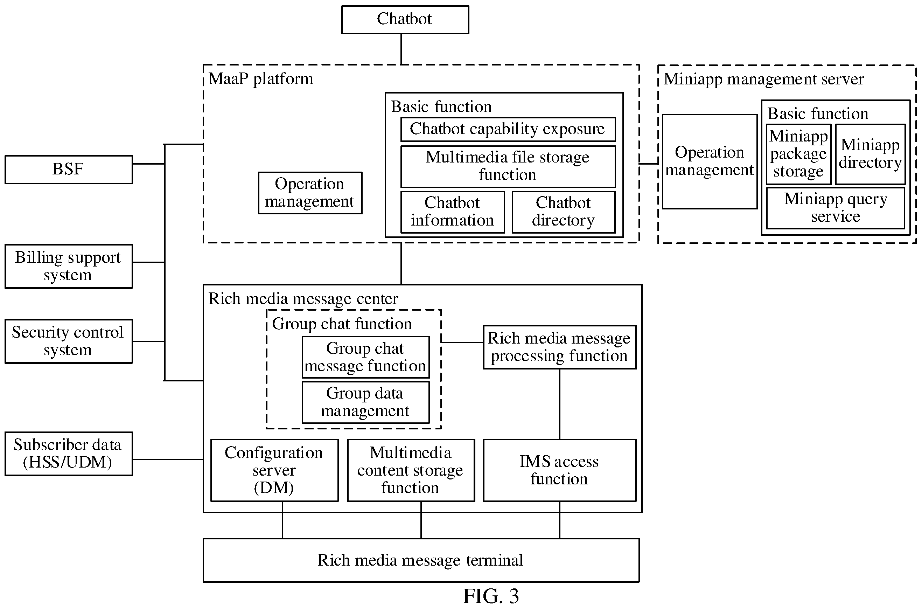

4. Miniapp management server: It is mainly configured to: review, authenticate, release, and summarize a rich media message miniapp, store rich media message miniapp information, provide a rich media message miniapp query service for a terminal device, store a rich media message miniapp package, and the like. The miniapp management server may also be referred to as a miniapp management platform, or referred to as a rich media miniapp management server or a rich media miniapp management platform. The following uses the miniapp management server for description. The miniapp management server is described in detail below with reference to FIG. 3.

FIG. 2 is a diagram of another communication system applicable to an embodiment of this application. As shown in FIG. 2, an architecture of a rich media message system is used as an example of the communication system. The communication system may include a rich media message center, a MaaP platform, and a rich media message terminal. The rich media message center and the MaaP platform may interface with subscriber data management (for example, a home subscriber server (home subscriber server, HSS) or a unified data management (unified data management, UDM) network element), a short message center (namely, a short message service center (short message service center, SMSC)), a rich media message interworking gateway, a phone number mapping (E.164 Number URI Mapping, ENUM) or domain name system (domain name system, DNS), a security control system, a service support system, a bootstrapping server (bootstrapping server function, BSF), and the like. For a possible form of the rich media message terminal, refer to the description of the terminal device in FIG. 1. Details are not described herein again. The following briefly describes other devices.
1. Rich media message center: It is capable of processing rich media messages, and interfaces with the MaaP platform to provide an industry message function. As shown in FIG. 2, the rich media message center includes a plurality of logical function modules. For example, the rich media message center includes a group chat function, an IP multimedia subsystem (IP multimedia subsystem, IMS) access function, a multimedia content storage function, and a configuration server. The logical function modules included in the rich media message center may be independently deployed (that is, these logical function modules may be deployed on different physical devices), or may be deployed together (that is, these function modules are all deployed on a same physical device, or are all built in the rich media message center). This is not limited in this embodiment of this application. Functions of the example logical function modules included in the rich media message center are as follows:
   (1) IMS access function: It is mainly for signaling access and media access and forwarding for rich media messages of users.
   (2) Rich media message processing function: It is mainly for processing sending and receiving of personal messages, industry messages, and enhanced call messages, managing sessions, processing message-related service functions, and the like.
   (3) Multimedia content storage function: It is mainly for storing a multimedia message file sent by an individual user.
   (4) Configuration server: It is also referred to as device management (device management, DM), and is mainly for storing user service-related data, such as a protocol parameter and a service parameter. The rich media message terminal can access the configuration server to obtain related data, to configure services for the rich media message terminal.
   (5) Group chat function: It may include a group chat message function and group data management. The group chat message function may be used to distribute a group chat message. The group data management can implement functions such as creating a group, inviting others to join a group, deleting a group member, disbanding a group, transferring administrator permission, setting a group name, and setting a group profile picture. In addition, the group data management can further implement storage and management of group chat-related data information, such as a group member list, a group name, a group profile picture, and a group member identity.
   The rich media message center may also be referred to as a 5G message center (5G message center, 5GMC), or may be referred to as an RCS service provider network (RCS service provider network). The following uses the rich media message center as an example for description.
2. MaaP platform: It interfaces with the rich media message center to provide an industry message function and bear an interactive rich media message service. As shown in FIG. 2, the MaaP platform may include a basic function and operation management. The operation management is mainly used by an operator to perform management such as activation and permission configuration on a chatbot. The basic function may include the following example logical function modules.
   (1) Chatbot directory: It is mainly for summarizing chatbot data information, providing algorithm services such as matching and sorting, processing a chatbot discovery request from a user, and returning a search result to the user.
   (2) Chatbot information: It is mainly for storing related information of the chatbot and processing a chatbot information query from the user. The related information may include information, for example, a name, a trademark, a service type, and contact information about an enterprise that provides the chatbot. The related information may further include information about the chatbot or the application, for example, chatbot usage, application usage, and developer information.
   (3) Multimedia file storage function: It is mainly for storing a multimedia message file delivered by the chatbot.
   (4) Chatbot capability exposure: It is mainly for abstracting and encapsulating rich media message capabilities in a unified manner, and providing a message access capability for the chatbot.

Similarly, the logical function modules included in the MaaP platform may be independently deployed, or may be deployed together. This is not limited in this embodiment of this application.

FIG. 3 is a diagram of another communication system applicable to an embodiment of this application. As shown in FIG. 3, an architecture of a rich media message system is used as an example of the communication system. As shown in FIG. 3, in comparison with FIG. 2, a miniapp management server is added to the system shown in FIG. 3.

The miniapp management server may be independently deployed, or may be built in a MaaP platform. This is not limited. The miniapp management server may include the following logical function modules.
(1) Operation management: It is mainly for checking whether a rich media message miniapp complies with rich media message miniapp development specifications, authenticating the rich media message miniapp, and releasing the rich media message miniapp to be found by a user.
(2) Miniapp package storage (namely, rich media message miniapp package storage): It is mainly for storing a rich media message miniapp package.
(3) Rich media message miniapp directory (namely, rich media message miniapp directory): It is mainly for summarizing and storing rich media message miniapp information. The rich media message miniapp information may include basic information, for example, an identifier (identifier, ID), a name, an icon, and a version of the rich media message miniapp. The rich media message miniapp information may further include detailed information about the rich media message miniapp, for example, a provider (an industry customer) of the rich media message miniapp, a service type, contact information, a website, and usage and developer information of the rich media message miniapp.

It may be understood that the miniapp directory and the chatbot directory may be the same or different. This is not limited. For example, the miniapp directory is the same as the chatbot directory. In a possible case, the architecture of the rich media message system includes a directory, where the directory may be used to summarize chatbot data information, that is, implement the function of the chatbot directory in FIG. 2, and may be further configured to summarize and store the rich media message miniapp information, that is, implement the function of the miniapp directory in FIG. 3.

(4) Miniapp query service (namely, rich media message miniapp query service): It is mainly for processing a rich media message miniapp query request from a rich media message terminal, providing algorithm services such as matching and sorting, and returning a query result to a user. The query result may include rich media message miniapp information found based on a rich media message miniapp keyword, for example, an ID, a name, an icon, and a version.

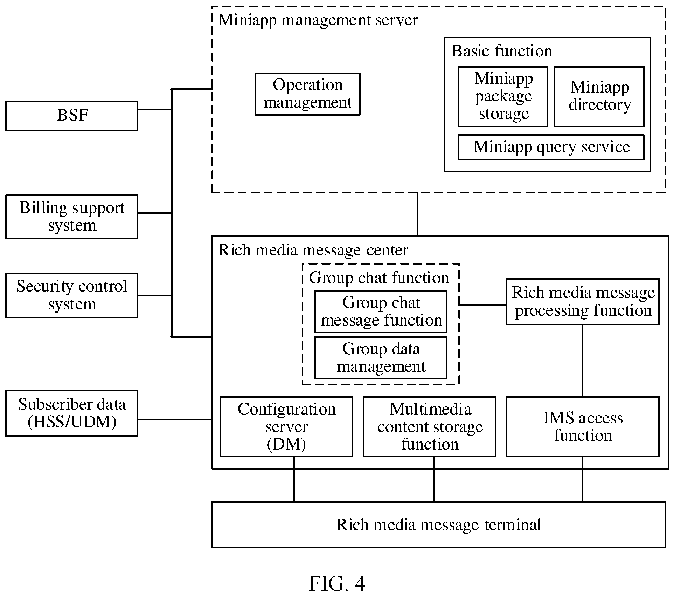

FIG. 4 is a diagram of another communication system applicable to an embodiment of this application. As shown in FIG. 4, an architecture of a rich media message system is used as an example of the communication system. As shown in FIG. 4, in comparison with FIG. 3, in the system shown in FIG. 4, a miniapp management server can directly interface with a rich media message center. For descriptions of devices, refer to the foregoing descriptions. Details are not described herein again.

Currently, an industry customer uses a chatbot to exchange messages with a user through a rich media message center and a MaaP platform, to provide services for the user, such as ticket booking, hotel query, and logistics query.

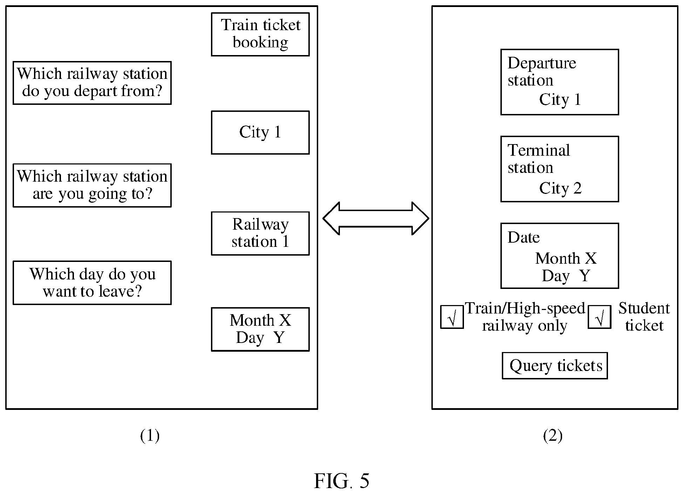

FIG. 5 is a diagram of booking a ticket by a user. As shown in (1) in FIG. 5, a chatbot of an industry customer may send messages to the user in a point-to-point manner, and the user replies to the chatbot with messages, to complete a ticket booking function. It can be learned from (1) in FIG. 5 that the user needs to enter information for a plurality of times to interact with the chatbot. The operation is complex, and the interaction process is long, affecting user experience.

This application provides a manner in which a miniapp management server is added to a rich media message system, to provide a rich media message miniapp query service for a rich media message terminal, and a rich media message miniapp is used to provide a service for the rich media message terminal, thereby simplifying the user operation, shortening the interaction process, and improving user experience. For example, ticket booking by the user is still used as an example. As shown in (2) in FIG. 5, the rich media miniapp is used to provide a ticket booking service for the rich media message terminal. After the rich media message miniapp is run, the rich media message terminal may interact with a server corresponding to the rich media miniapp, to implement the ticket booking service. It can be learned from FIG. 5 that the rich media message miniapp is used to provide the service for the rich media message terminal, thereby simplifying the user operation, shortening the interaction process, and improving user experience.

It may be understood that the term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

The foregoing briefly describes the terms related in this application, and details are not described in the following embodiments.

With reference to the accompanying drawings, the following describes in detail methods provided in embodiments of this application.

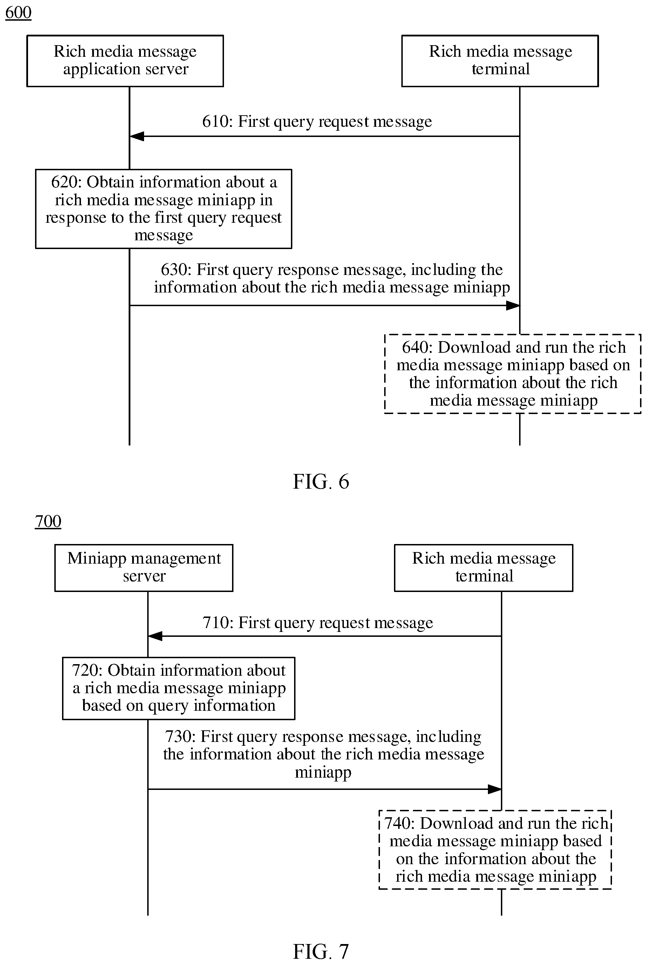

FIG. 6 is a diagram of a communication method 600 according to an embodiment of this application. The method 600 may include the following steps.

610: A rich media message application server receives a first query request message from a rich media message terminal.

Correspondingly, the rich media message terminal sends the first query request message to the rich media message application server.

In a possible implementation, the rich media message application server is a MaaP or a chatbot platform, and the rich media message terminal communicates with the rich media message application server through a chatbot directory query interface.

For example, the rich media message terminal sends the first query request message to the rich media message application server through the chatbot directory query interface. Correspondingly, the rich media message application server receives the first query request message from the rich media message terminal through the chatbot directory query interface. In this way, the rich media message terminal can query a rich media message miniapp through the chatbot directory query interface, without adding an additional configuration parameter or introducing an additional interface security authentication process, so that configuration efficiency and startup efficiency of the rich media message terminal can be improved. In addition, no additional user identity authentication process is needed, so that resource utilization of a rich media message system can be improved.

The chatbot directory query interface indicates an interface used by the rich media message terminal to send a request to the rich media application server to obtain a chatbot list. For example, the chatbot directory query interface is a client to service provider chatbot directory interface (Client to Service Provider Chatbot Directory interface) in GSMA RCC.07. It may be understood that a name of the chatbot directory query interface does not limit the protection scope of this embodiment of this application. In other words, in the future, if the name of the interface changes, a changed interface name is also applicable to this embodiment of this application.

The first query request message includes query information.

The query information may include information used to describe a rich media message miniapp needed by a user corresponding to the rich media message terminal, or related information of a rich media message miniapp queried by the rich media message terminal, or information about a requirement that a rich media message miniapp queried by the rich media message terminal needs to meet. The rich media message miniapp is a miniapp that uses a rich media message client in the rich media message terminal as a host client.

Optionally, the query information includes at least one of the following or a keyword included in at least one of the following: a name of the rich media message miniapp, a type of the rich media message miniapp, a name of a provider of the rich media message miniapp, a service content description or a function description of the rich media message miniapp, a language supported by the rich media message client, a version of the rich media message client, or the like.

Each item is described as follows:
- The name of the rich media message miniapp indicates the name of the rich media message miniapp to be queried.
- The type of the rich media message miniapp indicates the type of the rich media message miniapp to be queried.
- The name of the provider of the rich media message miniapp indicates the name of the provider of the rich media message miniapp to be queried.
- The service content description or the function description of the rich media message miniapp indicates service content or a function of the rich media message miniapp to be queried. The service content description or the function description of the rich media message miniapp is escaped by using a uniform resource locator (uniform resource locator, URL).
- The language supported by the rich media message client may indicate a preferred language of the rich media message miniapp to be queried. It is assumed that a "pl" parameter indicates the language of the rich media message miniapp to be queried. For example, if a language of the rich media message terminal is set to English, and other preferred languages for searching on the rich media message terminal are Spanish and German, the "pl" parameter in the query information may be set to: pl=en&pl=es&pl=de.
- The version of the rich media message client indicates the version of the rich media message client in the rich media message terminal.

It may be understood that the foregoing is an example for description, and this embodiment of this application is not limited thereto. For example, the query information may further include a quantity of rich media message miniapps, that is, a quantity of to-be-queried rich media message miniapps, for example, denoted as a "num" parameter. For another example, the query information may further include a 1^{st} matching result that should be included in a query result, for example, denoted as a "start" parameter. For example, the "start" parameter may use a zero-based index, that is, a 1^{st} query result is 0, a 2^{nd} query result is 1, and so on. The "start" parameter and the "num" parameter may be used together to determine a query result to be returned. For another example, the query information may further include a mobile subscriber ISDN number (mobile subscriber ISDN number, MSISDN) of the user corresponding to the rich media message terminal, where the ISDN is an integrated services digital network (integrated service digital network, ISDN). For another example, the query information may further include information about an operator to which the user corresponding to the rich media message terminal belongs, and the like.

Optionally, the first query request message further includes indication information.

The indication information may indicate that the query information includes the information used to describe the rich media message miniapp needed by the user corresponding to the rich media message terminal, or may indicate the rich media message application server to provide the rich media message miniapp, that is, indicate the rich media message application server to provide the information about the rich media message miniapp that matches the query information or indicate the rich media message application server to provide the rich media message miniapp described in the query information. In other words, the indication information indicates that the first query request message is used to query the rich media message miniapp, that is, the rich media message application server may learn, based on the indication information, that the first query request message is used to query the rich media message miniapp. The indication information may also be referred to as a rich media message miniapp query indication (for example, denoted as a miniapp parameter), and a name of the indication information does not limit the protection scope of this embodiment of this application.

In a possible implementation, if the first query request message includes the miniapp parameter, the first query request message is used to query the rich media message miniapp; or if the first query request message does not include the miniapp parameter, the first query request message is used to query a chatbot. It may be understood that the foregoing is an example for description, and this embodiment of this application is not limited thereto.

620: The rich media message application server obtains the information about the rich media message miniapp in response to the first query request message.

For example, the rich media message application server learns, based on the indication information in the first query request message, that the first query request message is used to query the rich media message miniapp. Therefore, the rich media message application server obtains, based on the query information in the first query request message, the information about the rich media message miniapp that matches the query information.

For example, if the query information includes the service content description or the function description of the rich media message miniapp, the rich media message application server obtains, based on the service content description or the function description of the rich media message miniapp, the rich media message miniapp that meets the condition. For example, if the service content description or the function description of the rich media message miniapp indicates to query a train ticket booking, the rich media message application server obtains, based on the service content description or the function description, a rich media message miniapp related to the train ticket booking.

For another example, if the query information includes the language supported by the rich media message client, the rich media message application server obtains, based on the language supported by the rich media message client, the rich media message miniapp that meets the condition. In other words, the language of the rich media message miniapp matches the language that is supported by the rich media message client and that is included in the query information.

For another example, if the query information includes the version of the rich media message client, the rich media message application server obtains, based on the version of the rich media message client, the rich media message miniapp that meets the condition. In other words, a running version of the rich media message miniapp matches the version that is of the rich media message client and that is included in the query information.

For another example, if the query information includes the name of the provider of the rich media message miniapp, the rich media message application server obtains, based on the name of the provider of the rich media message miniapp, the rich media message miniapp that meets the condition. In other words, the name of the provider of the rich media message miniapp matches the name that is of the provider of the rich media message miniapp and that is included in the query information.

It may be understood that the foregoing is an example for description, and this embodiment of this application is not limited thereto.

Optionally, the rich media message application server obtains the information about the rich media message miniapp in any one of the following implementations.

In a possible implementation, the rich media message application server sends a second query request message to a miniapp management server, where the second query request message includes the query information. The rich media message application server receives a second query response message from the miniapp management server, where the second query response message includes the information about the rich media message miniapp.

Based on this implementation, the rich media message application server can generate the second query request message based on the query information in the first query request message, and send the second query request message to the miniapp management server. After receiving the second query request message, the miniapp management server can determine, based on the query information in the second query request message, the information about the rich media message miniapp that matches the query information, and send the information about the rich media message miniapp to the miniapp management server.

In another possible implementation, the rich media message application server locally obtains the information about the rich media message miniapp based on the query information.

Based on this implementation, the rich media message application server can determine, based on the query information in the first query request message, the information about the rich media message miniapp that matches the query information.

Based on any one of the foregoing implementations, the rich media message application server can obtain the information about the rich media message miniapp that matches the query information in the first query request message.

Optionally, before the rich media message application server obtains the information about the rich media message miniapp, the method 600 further includes: The rich media message application server determines to allow the user corresponding to the rich media message terminal to use the rich media message miniapp.

For example, after receiving the first query request message sent by the rich media message terminal, if the rich media message application server learns, based on the indication information in the first query request message, that the first query request message is used to query the rich media message miniapp, the rich media message application server may first determine whether to allow the user corresponding to the rich media message terminal to use the rich media message miniapp. When determining to allow the user corresponding to the rich media message terminal to use the rich media message miniapp, the rich media message application server obtains, based on any one of the foregoing implementations, the information about the rich media message miniapp that matches the query information, that is, the information about the rich media message miniapp described in the query information. If the rich media message application server determines to forbid the user corresponding to the rich media message terminal to use the rich media message miniapp, the rich media message application server may return a query failure or return null to the rich media message terminal.

In a possible implementation, the rich media message application server determines, based on subscription information of the user corresponding to the rich media message terminal and/or the information about the operator to which the user corresponding to the rich media message terminal belongs, to allow the user corresponding to the rich media message terminal to use the rich media message miniapp.

630: The rich media message application server sends a first query response message to the rich media message terminal, where the first query response message includes the information about the rich media message miniapp.

Correspondingly, the rich media message terminal receives the first query response message.

In a possible implementation, the rich media message application server sends the first query response message to the rich media message terminal through the chatbot directory query interface. Correspondingly, the rich media message terminal receives the first query response message from the rich media message application server through the chatbot directory query interface.

Optionally, the method 600 further includes step 640: The rich media message terminal downloads and runs the rich media message miniapp based on the information about the rich media message miniapp.

Based on this embodiment of this application, the rich media message terminal sends the first query request message to the rich media message application server, where the first query request message includes the query information. In this way, the rich media message application server can obtain, based on the query information, the rich media message miniapp that matches the query information, that is, the rich media message miniapp described in the query information, and further provide the information about the rich media message miniapp for the rich media message terminal. In this way, the rich media message terminal can download and run the rich media message miniapp based on the information about the rich media message miniapp, so that some functions are implemented by using the rich media message miniapp, thereby simplifying a user operation and improving user experience.

Optionally, the information about the rich media message miniapp includes a download address of the rich media message miniapp. In this way, the rich media message terminal (or the rich media message client in the rich media message terminal) can download the rich media message miniapp based on the download address of the rich media message miniapp.

Optionally, the information about the rich media message miniapp further includes at least one of the following: an identifier of the rich media message miniapp, the name of the rich media message miniapp, an address of an icon of the rich media message miniapp, or a version of the rich media message miniapp.

It may be understood that the foregoing is an example for description, and this embodiment of this application is not limited thereto. For example, the information about the rich media message miniapp may further include at least one of the following: information about the provider of the rich media message miniapp or information about the rich media message miniapp. The information about the provider of the rich media message miniapp may include, for example, at least one of the following: a trademark, a service type, contact information, and a website. The information about the rich media message miniapp may include, for example, at least one of the following: usage of the rich media message miniapp, developer information of the rich media message miniapp, and the like.

FIG. 7 is a diagram of a communication method 700 according to an embodiment of this application. The method 700 may include the following steps.

710: A miniapp management server receives a first query request message from a rich media message terminal.

Correspondingly, the rich media message terminal sends the first query request message to the miniapp management server.

In a possible implementation, the miniapp management server receives the first query request message from the rich media message terminal through a miniapp directory query interface. Correspondingly, the rich media message terminal sends the first query request message to the miniapp management server through the miniapp directory query interface.

The miniapp directory query interface indicates an interface used by the rich media message terminal to send a request to the miniapp management server to obtain a rich media message miniapp list. It may be understood that a name of the miniapp directory query interface does not limit the protection scope of this embodiment of this application. In other words, in the future, if the name of the interface changes, a changed interface name is also applicable to this embodiment of this application.

The first query request message includes query information. For the query information, refer to the related descriptions in the method 600. Details are not described herein again.

720: The miniapp management server obtains information about a rich media message miniapp based on the query information.

The rich media message miniapp is a miniapp that uses a rich media message client in the rich media message terminal as a host client.

The miniapp management server determines, based on the query information in the first query request message, the information about the rich media message miniapp that matches the query information.

Optionally, before the miniapp management server obtains the information about the rich media message miniapp, the method 700 further includes: The miniapp management server determines to allow a user corresponding to the rich media message terminal to use the rich media message miniapp.

For example, after receiving the first query request message sent by the rich media message terminal, the miniapp management server may first determine whether to allow the user corresponding to the rich media message terminal to use the rich media message miniapp. When determining to allow the user corresponding to the rich media message terminal to use the rich media message miniapp, the miniapp management server obtains the information about the rich media message miniapp that matches the query information, that is, the information about the rich media miniapp described in the query information. If the miniapp management server determines to forbid the user corresponding to the rich media message terminal to use the rich media message miniapp, the miniapp management server may return a query failure or return null to the rich media message terminal.

In a possible implementation, the miniapp management server determines, based on subscription information of the user corresponding to the rich media message terminal and/or information about an operator to which the user corresponding to the rich media message terminal belongs, to allow the user corresponding to the rich media message terminal to use the rich media message miniapp.

730: The miniapp management server sends a first query response message to the rich media message terminal, where the first query response message includes the information about the rich media message miniapp.

Correspondingly, the rich media message terminal receives the first query response message.

In a possible implementation, the miniapp management server sends the first query response message to the rich media message terminal through the miniapp directory query interface. Correspondingly, the rich media message terminal receives the first query response message through the miniapp directory query interface.

Optionally, the method 700 further includes step 740: The rich media message terminal downloads and runs the rich media message miniapp based on the information about the rich media message miniapp.

For information about the rich media message miniapp, refer to the descriptions in the method 600. Details are not described herein again.

Based on this embodiment of this application, the rich media message terminal can send the first query request message to the miniapp management server, where the first query request message includes the query information. In this way, the miniapp management server can obtain, based on the query information, the rich media message miniapp that matches the query information, that is, the rich media message miniapp described in the query information, and further provide the information about the rich media message miniapp for the rich media message terminal. In this way, the rich media message terminal can download and run the rich media message miniapp based on the information about the rich media message miniapp, so that some functions are implemented by using the rich media message miniapp, thereby simplifying a user operation and improving user experience.

For ease of understanding, the following describes possible procedures applicable to embodiments of this application.

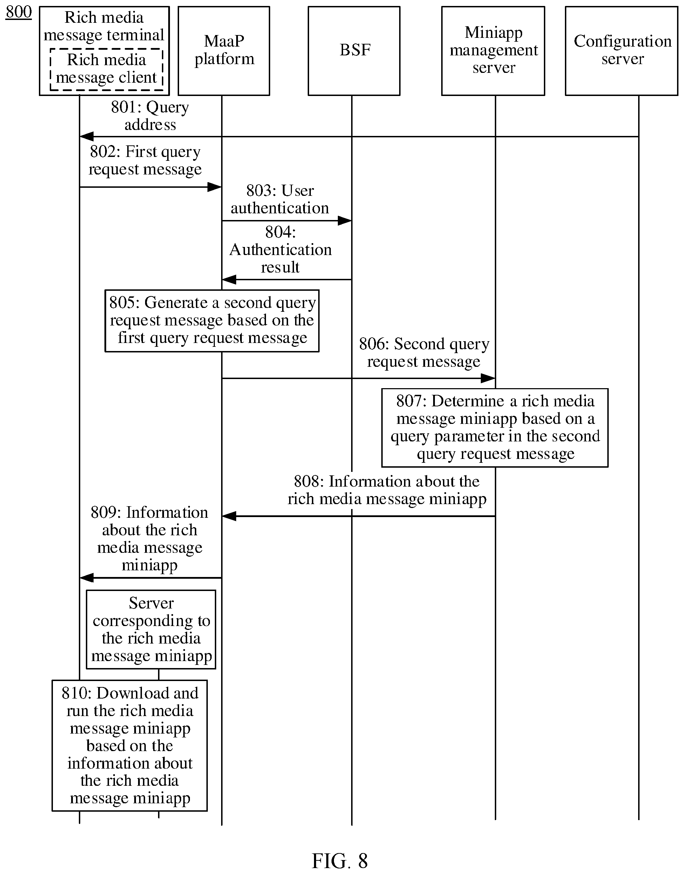

FIG. 8 is a schematic flowchart of a communication method 800 according to an embodiment of this application. The method 800 may be used to implement the solution of the foregoing method 600. In the method 800, a rich media message application server is a MaaP platform. The method 800 may include the following steps.

801: A rich media message terminal receives a query address.

The query address is an address at which the rich media message terminal queries a rich media message miniapp, that is, an address at which the rich media message terminal sends a first query request message.

For example, the rich media message terminal may construct a default configuration server network domain name (for example, a fully qualified domain name (fully qualified domain name, FQDN)) based on mobile country code (mobile country code, MCC) and mobile network code (mobile network code, MNC) information in an international mobile subscriber identity (international mobile subscriber identity, IMSI). For example, the constructed configuration server network domain name is config.rcs.mnc.mcc.pub.3gppnetwork.org. The rich media message terminal sends a message, for example, an HTTP/HTTPS message, to a configuration server, to request configuration information of the rich media message terminal. Correspondingly, the configuration server sends the configuration information of the rich media message terminal to the rich media message terminal. The configuration information includes the query address. For example, the query address is CHATBOT DIRECTORY.

Optionally, the rich media message terminal requests authentication (authorization) information from a BSF. Correspondingly, the BSF sends the authentication information to the rich media message terminal.

802: The rich media message terminal sends a first query request message to the MaaP platform.

The rich media message terminal initiates a rich media message miniapp query request to the MaaP platform. For example, the rich media message terminal sends the first query request message to the MaaP platform through a client to service provider chatbot directory interface. The rich media message terminal may directly send the first query request message to the MaaP platform, that is, the first query request message may not pass through the rich media message center.

In a possible implementation, the rich media message terminal generates the first query request message based on the query address (for example, CHATBOT DIRECTORY) received in step 801, a path value botlist, and a query parameter. The query parameter may include query information and indication information (for example, a miniapp parameter). For the query information and the indication information, refer to the descriptions in the method 600. Details are not described herein again. Optionally, the first query request message carries the authentication information requested from the BSF.

For example, a form of the first query request message is as follows:
https://{CHATBOT DIRECTORY}/botlist?miniapp=1 & q=%E6%89%93%BD & i=%2BABCDEFGHIJKLM & client_version=RCSAndrd-4.0

In the foregoing example, "miniapp=1" indicates that the first query request message is used to query the rich media message miniapp. In other words, "miniapp=1" is indication information, and indicates the MaaP platform to provide, based on the query information (for example, "q=%E6%89%93%BD & i=%2BABCDEFGHIJKLM & client_version=RCSAndrd-4.0") in the first query request message, information about the rich media message miniapp.

For another example, a form of the first query request message is as follows:
https://{CHATBOT DIRECTORY}/botlist?type=miniapp & q=%E6%89%93%BD & i=%2BABCDEFGHIJKLM & client_version=RCSAndrd-4.0

In the foregoing example, "type=miniapp" indicates that the first query request message is used to query the rich media message miniapp. In other words, "type=miniapp" is indication information, and indicates the MaaP platform to provide, based on the query information (for example, "q=%E6%89%93%BD & i=%2BABCDEFGHIJKLM & client_version=RCSAndrd-4.0") in the first query request message, information about the rich media message miniapp.

It may be understood that the foregoing two examples are examples for description, belong to variations of the foregoing examples, and are both applicable to this embodiment of this application.

803: The MaaP platform initiates user authentication to the BSF.

After receiving the first query request message, the MaaP platform may first initiate user authentication to the BSF, and the BSF performs authentication on a user.

804: The BSF sends an authentication result to the MaaP platform.

If the authentication result indicates that the authentication succeeds, the MaaP platform performs step 805.

It may be understood that steps 803 and 804 are examples for description, and this embodiment of this application is not limited thereto. For example, after receiving the first query request message, the MaaP platform may directly perform step 805.

805: The MaaP platform generates a second query request message based on the first query request message.

In step 805, the MaaP platform may parse the first query request message, and generate the second query request message based on the query parameter in the first query request message, that is, the query information in the query parameter.

For example, the MaaP locally configures an address of a miniapp management server, for example, https://{MINIAPP DIRECTORY}. The MaaP platform generates the second query request message based on the address of the miniapp management server, a path value (for example, denoted as miniapplist) of a miniapp resource, and the query information in the first query request message. For example, a form of the second query request is as follows:
https://{MINIAPP DIRECTORY}/miniapplist? q=%E6%89%93%BD & i=%2BABCDEFGHIJKLM & client_version=RCSAndrd-4.0

A query parameter in the second query request message may include the query information in the first query request message.

Optionally, when the MaaP platform determines that the first query request message is used to query the rich media message miniapp, the MaaP platform generates the second query request message based on the query information in the first query request message.

Specifically, the MaaP platform may parse the first query request message, to determine whether the first query request message is used to query the rich media message miniapp. For example, if the first query request message carries the indication information (for example, the miniapp parameter), the MaaP platform determines that the first query request message is used to query the rich media message miniapp. If the first query request message does not carry the indication information (for example, the miniapp parameter), the MaaP platform determines that the first query request message is used to query a chatbot. When the MaaP platform determines that the first query request message is used to query the rich media message miniapp, the MaaP platform generates the second query request message based on the query information in the first query request message. This can avoid a waste of signaling overheads caused when the first query request message is used to query the chatbot but the MaaP platform generates the second query request message.

Optionally, when the MaaP platform determines to allow the user corresponding to the rich media message terminal to query the rich media message miniapp, the MaaP platform generates the second query request message based on the query information in the first query request message.

Specifically, the MaaP platform may perform permission authentication on using a rich media message miniapp service by the user corresponding to the rich media message terminal. In a possible implementation, the MaaP platform determines, based on subscription information of the user corresponding to the rich media message terminal and/or information about an operator to which the user corresponding to the rich media message terminal belongs, whether to allow the user corresponding to the rich media message terminal to query the rich media message miniapp. When the MaaP platform determines to allow the user corresponding to the rich media message terminal to query the rich media message miniapp, the MaaP platform generates the second query request message based on the query information in the first query request message. This can avoid a waste of signaling overheads caused when the user corresponding to the rich media message terminal is forbidden to query the rich media message miniapp but the MaaP platform generates the second query request message.

It may be understood that the foregoing two cases may be used separately, or may be used in combination. For example, when the foregoing two cases are used in combination, that is, when the MaaP platform determines that the first query request message is used to query the rich media message miniapp, and allows the user corresponding to the rich media message terminal to query the rich media message miniapp, the second query request message is generated based on the query information in the first query request message.

806: The MaaP platform sends the second query request message to the miniapp management server.

For example, the second query request message is an HTTP GET message (for example, an HTTP GET request message).

807: The miniapp management server determines the rich media message miniapp based on the query information in the second query request message.

The miniapp management server parses the second query request message, and obtains, based on the query information in the second query request message, the rich media message miniapp that meets the condition. For a solution of determining the rich media message miniapp, refer to the related descriptions in step 620. Details are not described herein again.

Optionally, the miniapp management server determines whether to allow the user corresponding to the rich media message terminal to query the rich media message miniapp, that is, the miniapp management server performs permission authentication on using the rich media message miniapp service by the user corresponding to the rich media message terminal. In a possible implementation, the miniapp management server determines, based on the subscription information of the user corresponding to the rich media message terminal and/or the information about the operator to which the user corresponding to the rich media message terminal belongs, whether to allow the user corresponding to the rich media message terminal to query the rich media message miniapp. If the miniapp management server determines to allow the user corresponding to the rich media message terminal to query the rich media message miniapp, the miniapp management server determines, based on a requirement parameter in the second query request message, the rich media message miniapp that matches the query information, that is, the rich media message miniapp described in the query information.

It may be understood that, if the MaaP platform determines whether to allow the user corresponding to the rich media message terminal to query the rich media message miniapp, the miniapp management server may not need to determine whether to allow the user corresponding to the rich media message terminal to query the rich media message miniapp. For example, if the MaaP platform determines to allow the user corresponding to the rich media message terminal to query the rich media message miniapp, the MaaP platform sends the second query request message to the miniapp management server. If the miniapp management server receives the second query request message sent by the MaaP platform, the miniapp management server may allow, by default, the user corresponding to the rich media message terminal to query the rich media message miniapp. If the MaaP platform determines to forbid the user corresponding to the rich media message terminal to query the rich media message miniapp, the MaaP platform may directly return a query failure or a null result to the rich media message terminal, that is, the MaaP platform no longer needs to send the second query request message to the miniapp management server.

808: The miniapp management server sends the information about the rich media message miniapp to the MaaP platform.

For example, the miniapp management server sends 200 OK to the MaaP platform, where 200 OK includes the information about the rich media message miniapp.

For example, the information about the rich media message miniapp may include basic information of the rich media message miniapp, and the basic information of the rich media message miniapp includes a download address of the rich media message miniapp. The basic information of the rich media message miniapp further includes at least one of the following: an ID of the rich media message miniapp, a name of the rich media message miniapp, an address of an icon of the rich media message miniapp, a version of the rich media message miniapp, and the like. Further, optionally, the basic information of the rich media message miniapp may further include at least one of the following: a quantity of returned query objects, an index of a 1^{st} query result in a current query result set, a quantity of query objects, and an indication indicating whether the rich media message miniapp is presented to the user as a rich media message miniapp whose identity has been verified.

In a possible form, the information about the rich media message miniapp that is sent by the miniapp management server to the MaaP platform is as follows:

```
          Response:
          HTTP/1.1 200 OK
          Content-Type: application/j son
          Content-Length: xxxx
          {
           "miniapps": [{
           "id": "fool", //Rich media message miniapp ID, URI format
           "name": "xx taxi hailing", //Name of the rich media message miniapp
           "icon": "https://example.com/myLogo.png", //Link to an icon image of the rich media
 message miniapp
           "version": "1.0.1", //Version of the rich media message miniapp
           "verified": "true"
           }],
           "itemsReturned": 1,
           "startIndex": 0,
           "totalItems": 1
          }
```

It may be understood that the foregoing is an example for description, and this embodiment of this application is not limited thereto. For example, the information about the rich media message miniapp may further include detailed information about the rich media message miniapp, and the detailed information about the rich media message miniapp includes at least one of the following: information about a provider of the rich media message miniapp or information about the rich media message miniapp. The information about the provider of the rich media message miniapp may include, for example, at least one of the following: a trademark, a service type, contact information, and a website. The information about the rich media message miniapp may include, for example, at least one of the following: usage of the rich media message miniapp, developer information of the rich media message miniapp, and the like.

It may be further understood that the miniapp management server may simultaneously send the basic information of the rich media message miniapp and the detailed information of the rich media message miniapp to the MaaP platform. Alternatively, the miniapp management server may first send the basic information of the rich media message miniapp to the MaaP platform, and after receiving a request (where the request is used to request the detailed information about the rich media message miniapp) from the rich media message terminal, send the detailed information about the rich media message miniapp to the rich media message terminal through the MaaP platform.

Optionally, if the miniapp management server does not find the rich media message miniapp or the query fails, a null result is returned.

809: The MaaP platform sends the information about the rich media message miniapp to the rich media message terminal.

After receiving the information about the rich media message miniapp, the MaaP platform may send the information about the rich media message miniapp to the rich media message terminal. For example, the MaaP platform sends 200 OK to the rich media message terminal, where 200 OK includes the information about the rich media message miniapp.

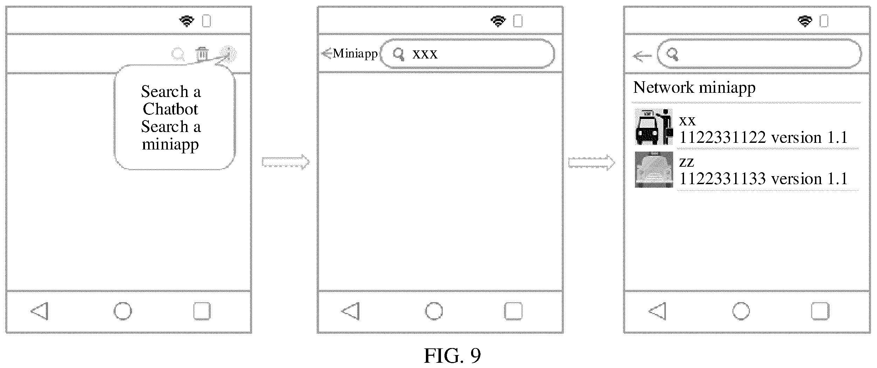

FIG. 9 is a diagram of a query effect of the rich media message miniapp.

As shown in FIG. 9, there are two query results of the rich media message terminal. A 1^{st} query result is as follows: The name of the rich media message miniapp is miniapp xx, the ID of the rich media message miniapp is 1122331122, and the version of the rich media message miniapp is 1.1. A 1^{st} query result is as follows: The name of the rich media message miniapp is miniapp zz, the ID of the rich media message miniapp is 1122331133, and the version of the rich media message miniapp is 1.1. In addition, the query result further includes the download address of the rich media message miniapp. The rich media message terminal (or the rich media message client in the rich media message) may download the rich media message miniapp based on the download address of the rich media message miniapp, and run the rich media message miniapp. It may be understood that the miniapp in FIG. 9 indicates the rich media message miniapp.

810: The rich media message terminal downloads and runs the rich media message miniapp based on the information about the rich media message miniapp.

For example, the rich media message terminal downloads the rich media message miniapp based on the download address of the rich media message miniapp, and runs the rich media message miniapp. For example, as shown in FIG. 8, a rich media message terminal (namely, the rich media message client in the rich media message terminal, or a rich media message miniapp downloaded by the rich media message client) interacts with a server (which may be referred to as, for example, a rich media message miniapp background server) corresponding to the rich media message miniapp, to run the rich media message miniapp, and further implement some service functions by using the rich media message miniapp, for example, implement service functions such as service discovery, search, interaction, and payment by using the rich media message miniapp. FIG. 5 is used as an example in which the ticket booking service can be implemented by using the rich media message miniapp.

It may be understood that the embodiment shown in FIG. 8 is mainly described by using an example in which the MaaP platform and the miniapp management device platform are separately deployed. This is not limited. For example, the MaaP platform and the miniapp management device platform may alternatively be integrated. In this case, after receiving the first query request message, the MaaP platform may directly obtain the information about the rich media message miniapp locally, and sends the determined information about the rich media message miniapp to the rich media message terminal.

The foregoing describes, with reference to steps 801 to 810 shown in FIG. 8, an example of a scenario in which the rich media message terminal queries the rich media message miniapp from the miniapp management server through the MaaP platform. The method 800 can be implemented by using the architecture shown in FIG. 3. Based on the foregoing embodiment, the miniapp management server is added to the rich media message system, to store and manage miniapp information and provide a rich media message miniapp query service for the rich media message terminal, and store and manage a rich media message miniapp package and provide a rich media message miniapp package download service for the rich media message terminal. The miniapp management server and the MaaP platform may be deployed on a same physical or virtual server, or may be deployed on different physical or virtual servers. This is not limited. The rich media message terminal includes the indication information and the query information in the first query request message. The MaaP platform parses the first query request message. For example, the MaaP platform determines, based on the indication information in the first query request message, that the rich media message miniapp is queried. For another example, the MaaP platform generates the second query request message based on the query information in the first query request message, and sends a request (namely, the second query request message) for querying the rich media message miniapp to the miniapp management server. The miniapp management server determines, based on the second query request message, the rich media message miniapp that meets the condition, and sends the information about the rich media message miniapp to the MaaP platform. The MaaP platform returns the information about the rich media message miniapp to the rich media message terminal, so that the rich media message terminal can run the rich media message miniapp. In this way, the rich media message terminal can discover the rich media message miniapp, and can further use the rich media message miniapp to complete functions such as ticket booking and customer survey. This simplifies a user operation, shortens an interaction process, and improves user experience. In addition, the existing rich media message system is slightly changed, so that the rich media message miniapp can be promoted and used in the rich media message system.

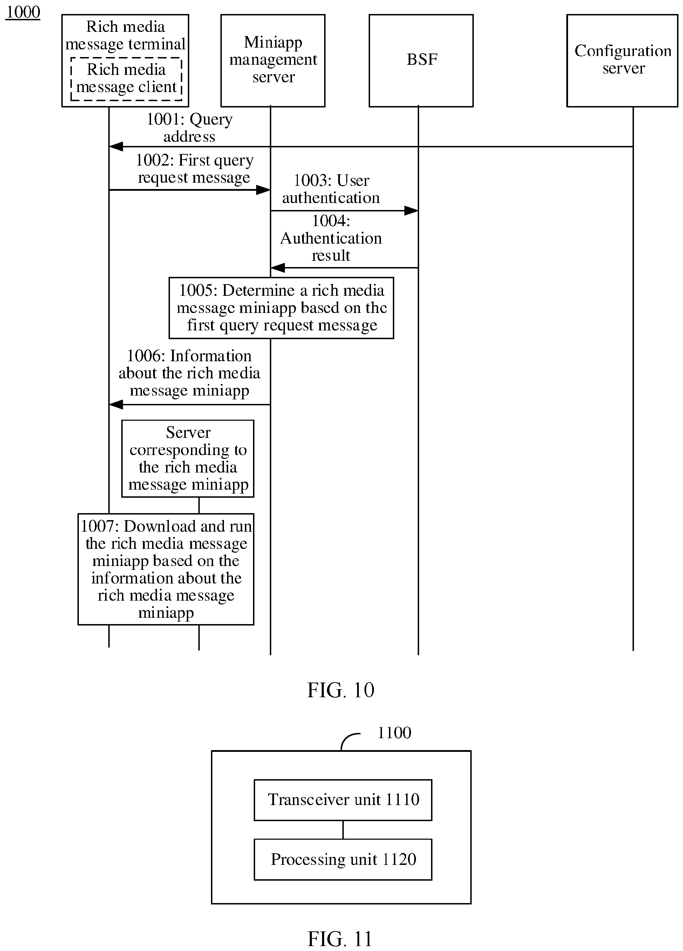

FIG. 10 is a schematic flowchart of a communication method 1000 according to another embodiment of this application. The method 1000 may be used to implement the solution of the foregoing method 700. The method 1000 may include the following steps.

1001: A rich media message terminal receives a query address.

The query address is an address at which the rich media message terminal queries a rich media message miniapp, that is, an address at which the rich media message terminal sends a first query request message.

For example, the rich media message terminal may construct a default configuration server network domain name (for example, an FQDN) based on MCC and MNC information in an IMSI. For example, the constructed configuration server network domain name is config.rcs.mnc.mcc.pub.3gppnetwork.org. The rich media message terminal sends a message, for example, an HTTP/HTTPS message, to a configuration server, to request configuration information of the rich media message terminal. Correspondingly, the configuration server sends the configuration information to the rich media message terminal. The configuration information includes query address information. For example, the query address information is MINIAPP DIRECTORY.

Optionally, the rich media message terminal requests authentication information from a BSF. Correspondingly, the BSF sends the authentication information to the rich media message terminal.

1002: The rich media message terminal sends the first query request message to a miniapp management server.

In a possible implementation, the rich media message terminal generates the first query request message based on the query address (for example, MINIAPP DIRECTORY) received in step 1001, a path value miniapplist, and a query parameter. The query parameter includes query information. For the query information, refer to the descriptions in the method 600. Details are not described herein again. Optionally, the first query request message carries the authentication information requested from the BSF.

For example, a form of the first query request message is as follows:
https://{MINIAPP DIRECTORY}/miniapplist? q=%E6%89%93%BD & i=%2BABCDEFGHIJKLM & client_version=RCSAndrd-4.0

1003: The miniapp management server initiates user authentication to the BSF.

After receiving the first query request message, the miniapp management server may first initiate user authentication to the BSF, and the BSF performs authentication on a user.

1004: The BSF sends an authentication result to the miniapp management server.

If the authentication result indicates that the authentication succeeds, the miniapp management server performs step 1005.

It may be understood that steps 1003 and 1004 are examples for description, and this embodiment of this application is not limited thereto. For example, after receiving the first query request message, the miniapp management server may directly perform step 1005.

1005: The miniapp management server determines the rich media message miniapp based on the first query request message.

In step 1005, the miniapp management server may parse the first query request message, and obtain, based on the query information in the first query request message, the rich media message miniapp that meets the condition.

Optionally, when the miniapp management server determines to allow a user corresponding to the rich media message terminal to query the rich media message miniapp, the miniapp management server determines, based on the query information in the first query request message, the rich media message miniapp described in the query information.

Specifically, the miniapp management server may perform permission authentication on using a rich media message miniapp service by the user corresponding to the rich media message terminal. In a possible implementation, the miniapp management server determines, based on the subscription information of the user corresponding to the rich media message terminal and/or information about an operator to which the user corresponding to the rich media message terminal belongs, whether to allow the user corresponding to the rich media message terminal to query the rich media message miniapp. When the miniapp management server determines to allow the user corresponding to the rich media message terminal to query the rich media message miniapp, the miniapp management server determines the rich media message miniapp based on the query information in the first query request message.

1006: The miniapp management server sends information about the rich media message miniapp to the rich media message terminal.

For example, the miniapp management server sends 200 OK to the rich media message terminal, where 200 OK includes the information about the rich media message miniapp.

For the information about the rich media message miniapp, refer to the related descriptions in step 808. Details are not described herein again.

It may be understood that the miniapp management server may simultaneously send basic information of the rich media message miniapp and detailed information of the rich media message miniapp to the rich media message terminal. Alternatively, the miniapp management server may first send the basic information of the rich media message miniapp to the rich media message terminal, and after receiving a request (where the request is used to request the detailed information about the rich media message miniapp) from the rich media message terminal, send the detailed information about the rich media message miniapp to the rich media message terminal.

Optionally, if the miniapp management server does not find the rich media message miniapp or the query fails, a null result is returned.

1007: The rich media message terminal downloads and runs the rich media message miniapp based on the information about the rich media message miniapp.

The rich media message terminal runs the rich media message miniapp, and further implements some service functions by using the rich media message miniapp, for example, implements service functions such as service discovery, search, interaction, and payment by using the rich media message miniapp. FIG. 5 is used as an example in which the ticket booking service can be implemented by using the rich media message miniapp.

Step 1007 is similar to step 810, and details are not described herein again.

The foregoing describes, with reference to steps 1001 to 1007 shown in FIG. 10, an example of a scenario in which the rich media message terminal directly queries the rich media message miniapp from the miniapp management server. The method 1000 can be implemented by using the architecture shown in FIG. 4. Based on the foregoing embodiment, the miniapp management server can store and manage the information about the rich media message miniapp, and provide a rich media message miniapp query service for the rich media message terminal. The miniapp management server can further store and manage a rich media message miniapp package, and provide a rich media message miniapp package download service for the rich media message terminal. The rich media message terminal includes the query information in the first query request message. The miniapp management server determines, based on the query information, the rich media message miniapp that meets the condition, and returns the information about the rich media message miniapp to the rich media message terminal. In this way, the rich media message terminal can discover the rich media message miniapp, and can further use the rich media message miniapp to complete functions such as ticket booking and customer survey. This simplifies a user operation, shortens an interaction process, and improves user experience.

It may be understood that the steps in FIG. 8 and FIG. 10 are merely examples for description, and are not strictly limited. In addition, sequence numbers of the foregoing processes do not mean a sequence of execution. The sequence of execution of the processes should be determined based on functions and internal logic of the processes, and should not constitute any limitation on an implementation process of this embodiment of this application.

It may be further understood that some message names in embodiments of this application do not limit the protection scope of embodiments of this application.

It may be further understood that some optional features in embodiments of this application may be independent of other features in some scenarios, or may be combined with other features in some scenarios. This is not limited.

It may be further understood that, in the foregoing method embodiments, the method and the operation implemented by the device may alternatively be implemented by a component (for example, a chip or a circuit) of the device. This is not limited.

Corresponding to the methods provided in the foregoing method embodiments, an embodiment of this application further provides a corresponding apparatus. The apparatus includes a corresponding module configured to perform the foregoing method embodiments. The module may be software, hardware, or a combination of software and hardware. It may be understood that the technical features described in the method embodiments are also applicable to the following apparatus embodiments.

FIG. 11 is a diagram of a communication apparatus 1100 according to an embodiment of this application. The apparatus 1100 includes a transceiver unit 1110 and a processing unit 1120. The transceiver unit 1110 may be configured to implement a corresponding communication function. The transceiver unit 1110 may also be referred to as a communication interface or a communication unit. The processing unit 1120 may be configured to perform a processing operation, for example, generate a query message and run a rich media message miniapp.

Optionally, the apparatus 1100 further includes a storage unit. The storage unit may be configured to store instructions and/or data. The processing unit 1120 may read the instructions and/or the data in the storage unit, so that the apparatus implements an action of a core network device or user equipment in the foregoing method embodiments.

In a first design, the apparatus 1100 may be the rich media message application server (for example, the rich media message application server in FIG. 6 or the MaaP platform in FIG. 8) in the foregoing embodiments, or may be a component (for example, a chip) of the rich media message application server. The apparatus 1100 can implement the corresponding steps or procedures performed by the rich media message application server in the foregoing method embodiments. The transceiver unit 1110 may be configured to perform an operation related to sending and receiving (for example, an operation of sending and/or receiving data or a message) of the rich media message application server in the foregoing method embodiments. For example, the transceiver unit 1110 may be configured to perform the operation of receiving the first query request message from the rich media message terminal in step 610 and the operation of sending the first query response message to the rich media message terminal in step 630 in FIG. 6, and may be further configured to perform an operation of sending and/or receiving data or a message by the MaaP platform in FIG. 8. The processing unit 1120 may be configured to perform an operation related to processing of the rich media message application server in the foregoing method embodiments, or an operation other than sending and receiving (for example, an operation other than sending and/or receiving data or a message). For example, the processing unit 1120 may be configured to obtain the information about the rich media message miniapp based on the first query request message. For another example, the processing unit 1120 may be configured to perform the operation in step 805 in FIG. 8.

In a possible implementation, the transceiver unit 1110 is configured to receive a first query request message from a rich media message terminal, where the first query request message includes query information, the query information includes information used to describe a rich media message miniapp needed by a user corresponding to the rich media message terminal, and the rich media message miniapp is a miniapp that uses a rich media message client in the rich media message terminal as a host client. The processing unit 1120 is configured to obtain information about the rich media message miniapp in response to the first query request message. The transceiver unit 1110 is further configured to send a first query response message to the rich media message terminal, where the first query response message includes the information about the rich media message miniapp.

Optionally, the transceiver unit 1110 is further configured to: send a second query request message to a miniapp management server, where the second query request message includes the query information; and receive a second query response message from the miniapp management server, where the second query response message includes the information about the rich media message miniapp.

Optionally, the processing unit 1120 is specifically configured to locally obtain the information about the rich media message miniapp based on the query information.

Optionally, the processing unit 1120 is further configured to determine to allow the user to use the rich media message miniapp.

Optionally, the processing unit 1120 is specifically configured to determine, based on subscription information of the user and/or information about an operator to which the user belongs, to allow the user to use the rich media message miniapp.

For example, the query information includes at least one of the following or a keyword included in at least one of the following: a name of the rich media message miniapp, a type of the rich media message miniapp, a name of a provider of the rich media message miniapp, a service content description or a function description of the rich media message miniapp, a language supported by the rich media message client, or a version of the rich media message client.

For example, the information about the rich media message miniapp includes a download address of the rich media message miniapp.

For example, the information about the rich media message miniapp includes at least one of the following: an identifier of the rich media message miniapp, the name of the rich media message miniapp, an address of an icon of the rich media message miniapp, or a version of the rich media message miniapp.

For example, the rich media message application server is a messaging as a platform MaaP or a chatbot Chatbot platform, and the rich media message terminal communicates with the rich media message application server through a chatbot directory query interface.

Optionally, the transceiver unit 1110 is specifically configured to: receive the first query request message through the chatbot directory query interface; and send the first query response message through the chatbot directory query interface.

For example, the first query request message further includes indication information, and the indication information indicates the rich media message application server to provide the information about the rich media message miniapp based on the query information.

In a second design, the apparatus 1100 may be the rich media message terminal (for example, the rich media message terminal in FIG. 6, FIG. 7, FIG. 8, or FIG. 10) in the foregoing embodiments, or may be a component (for example, a chip) of the rich media message terminal. The apparatus 1100 can implement the corresponding steps or procedures performed by the rich media message terminal in the foregoing method embodiments. The transceiver unit 1110 may be configured to perform an operation related to sending and receiving (for example, an operation of sending and/or receiving data or a message) of the rich media message terminal in the foregoing method embodiments. For example, the transceiver unit 1110 may be configured to perform the operation of sending the first query request message to the rich media message application server in step 610 and the operation of receiving the first query response message from the rich media message application server in step 630 in FIG. 6, may be further configured to perform the operation of sending the first query request message to the miniapp management server in step 710 and the operation of receiving the first query response message from the miniapp management server in step 730 in FIG. 7, may be further configured to perform the operation of sending and/or receiving data or a message by the rich media message terminal in FIG. 8, and may be further configured to perform an operation of sending and/or receiving data or a message by the rich media message terminal in FIG. 10. The processing unit 1120 may be configured to perform an operation related to data and/or information processing of the rich media message terminal in the foregoing method embodiments, or an operation other than sending and receiving (for example, an operation other than sending and/or receiving data or a message). For example, the processing unit 1120 may be configured to perform the operation in step 640 in FIG. 6, may be further configured to perform the operation in step 740 in FIG. 7, may be further configured to perform the operation in step 810 in FIG. 8, and may be further configured to perform the operation in step 1007 in FIG. 10.

In a possible implementation, the transceiver unit 1110 is configured to send a first query request message to a rich media message application server, where the first query request message includes query information, the query information includes information used to describe a rich media message miniapp needed by a user corresponding to the rich media message terminal, and the rich media message miniapp is a miniapp that uses a rich media message client in the rich media message terminal as a host client. The transceiver unit 1110 is further configured to receive a first query response message from the rich media message application server, where the first query response message includes information about the rich media message miniapp. The processing unit 1120 is configured to download and run the rich media message miniapp based on the information about the rich media message miniapp.

For example, the query information includes at least one of the following: a name of the rich media message miniapp, a type of the rich media message miniapp, a name of a provider of the rich media message miniapp, a keyword of a content or function description of the rich media message miniapp, a language supported by the rich media message client, or a version of the rich media message client.

For example, the information about the rich media message miniapp includes a download address of the rich media message miniapp.

For example, the information about the rich media message miniapp includes at least one of the following: an identifier of the rich media message miniapp, the name of the rich media message miniapp, an address of an icon of the rich media message miniapp, or a version of the rich media message miniapp.

For example, the rich media message application server is a messaging as a platform MaaP or a chatbot Chatbot platform, and the rich media message terminal communicates with the rich media message application server through a chatbot directory query interface.

Optionally, the transceiver unit 1110 is specifically configured to: send the first query request message through the chatbot directory query interface; and receive the first query response message through the chatbot directory query interface.

For example, the first query request message further includes indication information, and the indication information indicates the rich media message application server to provide the information about the rich media message miniapp based on the query information.

In another possible implementation, the transceiver unit 1110 is configured to send a first query request message to a miniapp management server, where the first query request message includes query information, the query information includes information used to describe a rich media message miniapp needed by a user corresponding to the rich media message terminal, and the rich media message miniapp is a miniapp that uses a rich media message client in the rich media message terminal as a host client. The transceiver unit 1110 is further configured to receive a first query response message from the miniapp management server, where the first query response message includes information about the rich media message miniapp. The processing unit 1120 is configured to download and run the rich media message miniapp based on the information about the rich media message miniapp.

For example, the query information includes at least one of the following or a keyword included in at least one of the following: a name of the rich media message miniapp, a type of the rich media message miniapp, a name of a provider of the rich media message miniapp, a service content description or a function description of the rich media message miniapp, a language supported by the rich media message client, or a version of the rich media message client.

For example, the information about the rich media message miniapp includes a download address of the rich media message miniapp.

For example, the information about the rich media message miniapp includes at least one of the following: an identifier of the rich media message miniapp, the name of the rich media message miniapp, an address of an icon of the rich media message miniapp, or a version of the rich media message miniapp.

For example, the rich media message terminal communicates with the miniapp management server through a miniapp directory query interface.

Optionally, the transceiver unit 1110 is specifically configured to: send the first query request message through the miniapp directory query interface; and receive the first query response message through the miniapp directory query interface.

In a third design, the apparatus 1100 may be the miniapp management server in the foregoing embodiments, or may be a component (for example, a chip) of the miniapp management server. The apparatus 1100 can implement the corresponding steps or procedures performed by the miniapp management server in the foregoing method embodiments. The transceiver unit 1110 may be configured to perform an operation related to sending and receiving (for example, an operation of sending and/or receiving data or a message) of the miniapp management server in the foregoing method embodiments. For example, the transceiver unit 1110 may be configured to perform the operation of receiving the first query request message from the rich media message terminal in step 710 and the operation of sending the first query response message to the rich media message terminal in step 730 in FIG. 7, and may be further configured to perform an operation of sending and/or receiving data or a message by the miniapp management servers in FIG. 8 and FIG. 10. The processing unit 1120 may be configured to perform an operation related to processing of the miniapp management server in the foregoing method embodiments, or an operation other than sending and receiving (for example, an operation other than sending and/or receiving data or a message). For example, the processing unit 1120 may be configured to perform the operation in step 730 in FIG. 7, may be further configured to perform the operation of step 807 in FIG. 8, and may be further configured to perform the operation of step 1005 in FIG. 10.

In a possible implementation, the transceiver unit 1110 is configured to receive a first query request message from a rich media message terminal, where the first query request message includes query information, the query information includes information used to describe a rich media message miniapp needed by a user corresponding to the rich media message terminal, and the rich media message miniapp is a miniapp that uses a rich media message client in the rich media message terminal as a host client. The processing unit 1120 is configured to obtain information about the rich media message miniapp based on the query information. The transceiver unit 1110 is further configured to send a first query response message to the rich media message terminal, where the first query response message includes the information about the rich media message miniapp.

Optionally, the processing unit 1120 is further configured to determine to allow the user to use the rich media message miniapp.

Optionally, the processing unit 1120 is specifically configured to determine, based on subscription information of the user and/or information about an operator to which the user belongs, to allow the user to use the rich media message miniapp.

For example, the query information includes at least one of the following or a keyword included in at least one of the following: a name of the rich media message miniapp, a type of the rich media message miniapp, a name of a provider of the rich media message miniapp, a service content description or a function description of the rich media message miniapp, a language supported by the rich media message client, or a version of the rich media message client.

For example, the information about the rich media message miniapp includes a download address of the rich media message miniapp.

For example, the information about the rich media message miniapp includes at least one of the following: an identifier of the rich media message miniapp, the name of the rich media message miniapp, an address of an icon of the rich media message miniapp, or a version of the rich media message miniapp.

For example, the rich media message terminal communicates with the miniapp management server through a miniapp directory query interface.

Optionally, the transceiver unit 1110 is specifically configured to: receive the first query request message through the miniapp directory query interface; and send the first query response message through the miniapp directory query interface.

It may be understood that a specific process in which the units perform the foregoing corresponding steps is described in detail in the foregoing method embodiments. For brevity, details are not described herein again.

It may be further understood that the apparatus 1100 herein is embodied in a form of a functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus 1100 may be specifically the rich media message application server (for example, the rich media message application server in FIG. 6 or the MaaP platform in FIG. 8) in the foregoing embodiments, and may be configured to perform procedures and/or steps corresponding to the rich media message application server in the foregoing method embodiments, for example, steps 610 to 630 in FIG. 6, and steps 803 to 806, 808, and 809 in FIG. 8. Alternatively, the apparatus 1100 may be specifically the rich media message terminal (for example, the rich media message terminal in FIG. 6, FIG. 7, FIG. 8, or FIG. 10) in the foregoing embodiments, and may be configured to perform procedures and/or steps corresponding to the rich media message terminal in the foregoing method embodiments, for example, steps 610, 630, and 640 in FIG. 6, steps 710, 730, and 740 in FIG. 7, steps 801, 802, 809, and 810 in FIG. 8, and steps 1001, 1002, 1006, and 1007 in FIG. 10. Alternatively, the apparatus 1100 may be specifically the miniapp management server in the foregoing embodiments, and may be configured to perform procedures and/or steps corresponding to the miniapp management server in the foregoing method embodiments, for example, steps 710 to 730 in FIG. 7, steps 806 to 808 in FIG. 8, and steps 1002 to 1006 in FIG. 10. To avoid repetition, details are not described herein again.

The apparatus 1100 in the foregoing solutions has a function of implementing corresponding steps performed by the rich media message application server (for example, the rich media message application server in FIG. 6 or the MaaP platform in FIG. 8) in the foregoing methods. Alternatively, the apparatus 1100 in the foregoing solutions has a function of implementing corresponding steps performed by the rich media message terminal (for example, the rich media message terminal in FIG. 6, FIG. 7, FIG. 8, or FIG. 10) in the foregoing methods. Alternatively, the apparatus 1100 in the foregoing solutions has a function of implementing corresponding steps performed by the miniapp management server in the foregoing methods. The function may be implemented by hardware, or may be implemented by hardware executing corresponding software. The hardware or the software includes one or more modules corresponding to the foregoing functions. For example, the transceiver unit may be replaced by a transceiver (for example, a sending unit in the transceiver unit may be replaced by a transmitter, and a receiving unit in the transceiver unit may be replaced by a receiver), and another unit, for example, the processing unit, may be replaced by a processor, to separately perform a sending and receiving operation and a related processing operation in the method embodiments.

In addition, the transceiver unit 1110 may alternatively be a transceiver circuit (for example, may include a receiving circuit and a sending circuit), and the processing unit may be a processing circuit.

It should be noted that the apparatus in FIG. 11 may be the device in the foregoing embodiments, or may be a chip or a chip system, for example, a system-on-chip (system-on-chip, SoC). The transceiver unit may be an input/output circuit or a communication interface. The processing unit is a processor, a microprocessor, or an integrated circuit integrated on the chip. This is not limited herein.

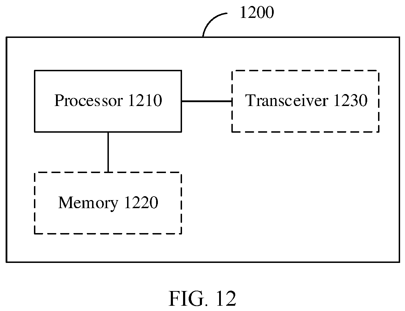

FIG. 12 is a diagram of another communication apparatus 1200 according to an embodiment of this application. The apparatus 1200 includes a processor 1210. The processor 1210 is configured to execute a computer program or instructions stored in a memory 1220, or read data stored in the memory 1220, to perform the methods in the foregoing method embodiments. Optionally, there are one or more processors 1210.

Optionally, as shown in FIG. 12, the apparatus 1200 further includes the memory 1220, and the memory 1220 is configured to store the computer program or the instructions and/or the data. The memory 1220 and the processor 1210 may be integrated, or may be disposed separately. Optionally, there are one or more memories 1220.

Optionally, as shown in FIG. 12, the apparatus 1200 further includes a transceiver 1230. The transceiver 1230 is configured to receive a signal and/or send a signal. For example, the processor 1210 is configured to control the transceiver 1230 to receive and/or send the signal.

In a solution, the apparatus 1200 is configured to implement operations performed by the rich media message application server (for example, the rich media message application server in FIG. 6 or the MaaP platform in FIG. 8) in the foregoing method embodiments.

In another solution, the apparatus 1200 is configured to implement operations performed by the rich media message terminal (for example, the rich media message terminal in FIG. 6, FIG. 7, FIG. 8, or FIG. 10) in the foregoing method embodiments.

In another solution, the apparatus 1200 is configured to implement operations performed by the miniapp management server in the foregoing method embodiments.

It may be understood that, the processor mentioned in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It may be further understood that the memory mentioned in embodiments of this application may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, and not limitation, the RAM includes a plurality of forms, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, the memory (a storage module) may be integrated into the processor.

It should further be noted that the memory described herein is intended to include, but is not limited to, these and any other appropriate type of memory.

An embodiment of this application further provides a computer-readable storage medium, storing computer instructions used to implement the method performed by the rich media message application server (for example, the rich media message application server in FIG. 6 or the MaaP platform in FIG. 8) in the foregoing method embodiments.

An embodiment of this application further provides a computer-readable storage medium, storing computer instructions used to implement the method performed by the rich media message terminal (for example, the rich media message terminal in FIG. 6, FIG. 7, FIG. 8, or FIG. 10) in the foregoing method embodiments.

An embodiment of this application further provides a computer-readable storage medium, storing computer instructions used to implement the method performed by the miniapp management server in the foregoing method embodiments.

An embodiment of this application further provides a computer program product, including instructions. The instructions, when executed by a computer, implement the method performed by the rich media message application server (for example, the rich media message application server in FIG. 6 or the MaaP platform in FIG. 8) in the foregoing method embodiments.

An embodiment of this application further provides a computer program product, including instructions. The instructions, when executed by a computer, implement the method performed by the rich media message terminal (for example, the rich media message terminal in FIG. 6, FIG. 7, FIG. 8, or FIG. 10) in the foregoing method embodiments.

An embodiment of this application further provides a computer program product, including instructions. The instructions, when executed by a computer, implement the method performed by the miniapp management server in the foregoing method embodiments.

An embodiment of this application further provides a communication system, including at least one of the rich media message application server (for example, the rich media message application server in FIG. 6 or the MaaP platform in FIG. 8), the rich media message terminal (for example, the rich media message terminal in FIG. 6, FIG. 7, FIG. 8, or FIG. 10), and the miniapp management server above.

For explanations and beneficial effect of related content of any one of the apparatuses provided above, refer to the corresponding method embodiment provided above. Details are not described herein again.

In the several embodiments provided in this application, it should be understood that the disclosed apparatus and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or another programmable apparatus. For example, the computer may be a personal computer, a server, a network device, or the like. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, and microwave, or the like) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like. For example, the usable medium may include but is not limited to any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving, by a rich media message application server, a first query request message from a rich media message terminal, wherein the first query request message comprises query information, the query information comprises information used to describe a rich media message miniapp needed by a user corresponding to the rich media message terminal, and the rich media message miniapp is a miniapp that uses a rich media message client in the rich media message terminal as a host client; and
obtaining, by the rich media message application server, information about the rich media message miniapp in response to the first query request message, and sending a first query response message to the rich media message terminal, wherein the first query response message comprises the information about the rich media message miniapp.

2. The method according to claim 1, wherein the obtaining, by the rich media message application server, information about the rich media message miniapp comprises:
sending, by the rich media message application server, a second query request message to a miniapp management server, wherein the second query request message comprises the query information; and
receiving, by the rich media message application server, a second query response message from the miniapp management server, wherein the second query response message comprises the information about the rich media message miniapp.

3. The method according to claim 1, wherein the obtaining, by the rich media message application server, information about the rich media message miniapp comprises:
locally obtaining, by the rich media message application server, the information about the rich media message miniapp based on the query information.

4. The method according to any one of claims 1 to 3, wherein before the obtaining, by the rich media message application server, information about the rich media message miniapp, the method further comprises:
determining, by the rich media message application server, to allow the user to use the rich media message miniapp.

5. The method according to claim 4, wherein the determining, by the rich media message application server, to allow the user to use the rich media message miniapp comprises:
determining, by the rich media message application server based on subscription information of the user and/or information about an operator to which the user belongs, to allow the user to use the rich media message miniapp.

6. The method according to any one of claims 1 to 5, wherein the query information comprises at least one of the following or a keyword comprised in at least one of the following: a name of the rich media message miniapp, a type of the rich media message miniapp, a name of a provider of the rich media message miniapp, a service content description or a function description of the rich media message miniapp, a language supported by the rich media message client, or a version of the rich media message client.

7. The method according to any one of claims 1 to 6, wherein the information about the rich media message miniapp comprises a download address of the rich media message miniapp.

8. The method according to any one of claims 1 to 7, wherein the information about the rich media message miniapp comprises at least one of the following: an identifier of the rich media message miniapp, the name of the rich media message miniapp, a download address of an icon of the rich media message miniapp, or a version of the rich media message miniapp.

9. The method according to any one of claims 1 to 8, wherein the rich media message application server is a messaging as a platform MaaP or a chatbot Chatbot platform, and the rich media message terminal communicates with the rich media message application server through a chatbot directory query interface.

10. The method according to claim 9, wherein
the receiving, by a rich media message application server, a first query request message from a rich media message terminal comprises: receiving, by the rich media message application server, the first query request message through the chatbot directory query interface; and
the sending, by the rich media message application server, a first query response message to the rich media message terminal comprises: sending, by the rich media message application server, the first query response message through the chatbot directory query interface.

11. The method according to claim 9 or 10, wherein the first query request message further comprises indication information, and the indication information indicates the rich media message application server to provide the information about the rich media message miniapp based on the query information.

12. A communication method, comprising:
sending, by a rich media message terminal, a first query request message to a rich media message application server, wherein the first query request message comprises query information, the query information comprises information used to describe a rich media message miniapp needed by a user corresponding to the rich media message terminal, and the rich media message miniapp is a miniapp that uses a rich media message client in the rich media message terminal as a host client;
receiving, by the rich media message terminal, a first query response message from the rich media message application server, wherein the first query response message comprises information about the rich media message miniapp; and
downloading and running, by the rich media message terminal, the rich media message miniapp based on the information about the rich media message miniapp.

13. The method according to claim 12, wherein the query information comprises at least one of the following or a keyword comprised in at least one of the following: a name of the rich media message miniapp, a type of the rich media message miniapp, a name of a provider of the rich media message miniapp, a service content description or a function description of the rich media message miniapp, a language supported by the rich media message client, or a version of the rich media message client.

14. The method according to claim 12 or 13, wherein the information about the rich media message miniapp comprises a download address of the rich media message miniapp.

15. The method according to any one of claims 12 to 14, wherein the information about the rich media message miniapp comprises at least one of the following: an identifier of the rich media message miniapp, the name of the rich media message miniapp, an address of an icon of the rich media message miniapp, or a version of the rich media message miniapp.

16. The method according to any one of claims 12 to 15, wherein the rich media message application server is a messaging as a platform MaaP or a chatbot Chatbot platform, and the rich media message terminal communicates with the rich media message application server through a chatbot directory query interface.

17. The method according to claim 16, wherein
the sending, by a rich media message terminal, a first query request message to a rich media message application server comprises:
sending, by the rich media message terminal, the first query request message through the chatbot directory query interface; and
the receiving, by the rich media message terminal, a first query response message from the rich media message application server comprises:
receiving, by the rich media message terminal, the first query response message through the chatbot directory query interface.

18. The method according to claim 16 or 17, wherein the first query request message further comprises indication information, and the indication information indicates the rich media message application server to provide the information about the rich media message miniapp based on the query information.

19. A communication method, comprising:
sending, by a rich media message terminal, a first query request message to a rich media message application server, wherein the first query request message comprises query information, the query information comprises information used to describe a rich media message miniapp needed by a user corresponding to the rich media message terminal, and the rich media message miniapp is a miniapp that uses a rich media message client in the rich media message terminal as a host client;
receiving, by the rich media message application server, the first query request message, obtaining information about the rich media message miniapp in response to the first query request message, and sending a first query response message to the rich media message terminal, wherein the first query response message comprises the information about the rich media message miniapp; and
receiving, by the rich media message terminal, the first query response message, and downloading and running the rich media message miniapp based on the information about the rich media message miniapp.

20. The method according to claim 19, wherein the obtaining, by the rich media message application server, information about the rich media message miniapp comprises:
sending, by the rich media message application server, a second query request message to a miniapp management server, wherein the second query request message comprises the query information;
sending, by the miniapp management server, a second query response message to the rich media message application server, wherein the second query response message comprises the information about the rich media message miniapp; and
receiving, by the rich media message application server, the second query response message.

21. The method according to claim 19, wherein the obtaining, by the rich media message application server, information about the rich media message miniapp comprises:
locally obtaining, by the rich media message application server, the information about the rich media message miniapp based on the query information.

22. The method according to any one of claims 19 to 21, wherein before the obtaining, by the rich media message application server, information about the rich media message miniapp, the method further comprises:
determining, by the rich media message application server, to allow the user to use the rich media message miniapp.

23. The method according to claim 22, wherein the determining, by the rich media message application server, to allow the user to use the rich media message miniapp comprises:
determining, by the rich media message application server based on subscription information of the user and/or information about an operator to which the user belongs, to allow the user to use the rich media message miniapp.

24. The method according to any one of claims 19 to 23, wherein the query information comprises at least one of the following or a keyword comprised in at least one of the following: a name of the rich media message miniapp, a type of the rich media message miniapp, a name of a provider of the rich media message miniapp, a service content description or a function description of the rich media message miniapp, a language supported by the rich media message client, or a version of the rich media message client.

25. The method according to any one of claims 19 to 24, wherein the information about the rich media message miniapp comprises a download address of the rich media message miniapp.

26. The method according to any one of claims 19 to 25, wherein the information about the rich media message miniapp comprises at least one of the following: an identifier of the rich media message miniapp, the name of the rich media message miniapp, a download address of an icon of the rich media message miniapp, or a version of the rich media message miniapp.

27. The method according to any one of claims 19 to 26, wherein the rich media message application server is a messaging as a platform MaaP or a chatbot Chatbot platform, and the rich media message terminal communicates with the rich media message application server through a chatbot directory query interface.

28. The method according to claim 27, wherein
the sending, by a rich media message terminal, a first query request message to a rich media message application server, and receiving, by the rich media message application server, the first query request message comprises:
sending, by the rich media message terminal, the first query request message through the chatbot directory query interface, and receiving, by the rich media message application server, the first query request message through the chatbot directory query interface; and
the sending, by the rich media message application server, a first query response message to the rich media message terminal, and receiving, by the rich media message terminal, the first query response message comprises:
sending, by the rich media message application server, the first query response message through the chatbot directory query interface, and receiving, by the rich media message terminal, the first query response message through the chatbot directory query interface.

29. The method according to claim 27 or 28, wherein the first query request message further comprises indication information, and the indication information indicates the rich media message application server to provide the information about the rich media message miniapp based on the query information.

30. A communication apparatus, comprising units or modules configured to perform the method according to any one of claims 1 to 29.

31. A communication apparatus, comprising at least one processor, wherein
the at least one processor is configured to execute a computer program stored in a memory, to enable the apparatus to perform the method according to any one of claims 1 to 11; or
the at least one processor is configured to execute a computer program stored in a memory, to enable the apparatus to perform the method according to any one of claims 12 to 18; or
the at least one processor is configured to execute a computer program stored in a memory, to enable the apparatus to perform the method according to any one of claims 19 to 29.

32. A communication system, comprising a rich media message application server and a rich media message terminal, wherein
the rich media message application server is configured to perform the method according to any one of claims 1 to 11, and the rich media message terminal is configured to perform the method according to any one of claims 12 to 18.

33. The communication system according to claim 32, wherein the system further comprises a miniapp management server, and the miniapp management server is configured to communicate with the rich media message application server.

34. A computer-readable storage medium, comprising a computer program, wherein
when the computer program is run on a computer, the computer is enabled to perform the method according to any one of claims 1 to 11; or
when the computer program is run on a computer, the computer is enabled to perform the method according to any one of claims 12 to 18; or
when the computer program is run on a computer, the computer is enabled to perform the method according to any one of claims 19 to 29.

35. A computer program product, wherein the computer program product comprises computer program code, wherein
when the computer program code is run on a computer, the computer is enabled to implement the method according to any one of claims 1 to 11; or
when the computer program code is run on a computer, the computer is enabled to implement the method according to any one of claims 12 to 18; or
when the computer program code is run on a computer, the computer is enabled to implement the method according to any one of claims 19 to 29.
